# EUROPEAN PATENT SPECIFICATION

(11) **EP 2 829 084 B1**
(45) Date of publication and mention of the grant of the patent: **05.05.2021**
(21) Application number: 13712050.7
(22) Date of filing: 12.03.2013
(51) Int. Cl.: H04W 4/00, H04W 88/16, H04L 29/08, H04W 4/70

(54) **METHOD AND APPARATUS FOR SUPPORTING MACHINE-TO-MACHINE CACHING AT A SERVICE CAPABILITY LAYER**
VERFAHREN UND VORRICHTUNG ZUR UNTERSTÜTZUNG VON MASCHINE-ZU-MASCHINE-ZWISCHENSPEICHERUNG AUF EINER SERVICEKAPAZITÄTSSCHICHT
PROCÉDÉ ET APPAREIL ASSURANT UNE CACHE MACHINE À MACHINE AU NIVEAU D'UNE COUCHE DE CAPACITÉS DE SERVICES

(30) Priority: 22.03.2012 US 201261614156 P; 20.12.2012 US 201261739921 P
(43) Date of publication of application: 28.01.2015
(73) Proprietor: IOT HOLDINGS, INC., Wilmington, DE 19809 (US)
(72) Inventor: DONG, Lijun, San Diego, CA 92126 (US); SEED, Dale N., Allentown, PA 18104 (US); WANG, Chonggang, Princeton, NJ 08540 (US); STARSINIC, Michael F., Newtown, Pennsylvania 18940 (US); LU, Gang, Montreal, Quebec H9B 1J4 (CA); RUSSELL, Paul L. Jr., Pennington, NJ 08534 (US)
(74) Representative: Heinze, Ekkehard
(86) International application number: PCT/US2013/030380
(87) International publication number: WO 2013/142139

(56) References cited:
- WO-A1-2011/112683
- Barbara Pareglio: "OVERVIEW OF ETSI M2M ARCHITECTURE", , October 2011 (2011-10), XP055095824, Retrieved from the Internet: URL:http://www.gisfi.org/wg_documents/GISF I_IoT_201112161.pdf [retrieved on 2014-01-10]
- Guang Lu: "OVERVIEW OF ETSI M2M RELEASE 1 STAGE 3 - API AND RESOURCE USAGE", , 2011, XP055095827, Retrieved from the Internet: URL:http://docbox.etsi.org/workshop/2011/2 01110_m2mworkshop/02_m2m_standard/m2mwg3_a pi_andresource_usage_lu.pdf [retrieved on 2014-01-10]
- TELEFON AB LM ERICSSON: "Returning announced resources from collections;M2MWG2(11)0006_Returning_annou nced_resources_from_collections", ETSI DRAFT; M2MWG2(11)0006_RETURNING_ANNOUNCED_RESOURC ES_FROM_COLLECTIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M - Closed_WGs_Archive, 18 August 2011 (2011-08-18), pages 1-3, XP014207684, [retrieved on 2011-08-18]
- INTERDIGITAL COMMUNICATIONS ET AL: "M2M SCL Discovery Procedures", INTERNET CITATION, 7 March 2011 (2011-03-07), pages 1-9, XP002677108, Retrieved from the Internet: URL:http://docbox.etsi.org/M2M/ [retrieved on 2012-06-01]

## Description

### BACKGROUND

European Telecommunications Standards Institute (ETSI) machine- to-machine (M2M) standard contains an overall end-to-end M2M functional architecture. The ETSI M2M standard describes a resources-based architecture that can be used for the exchange of data and events between machines.

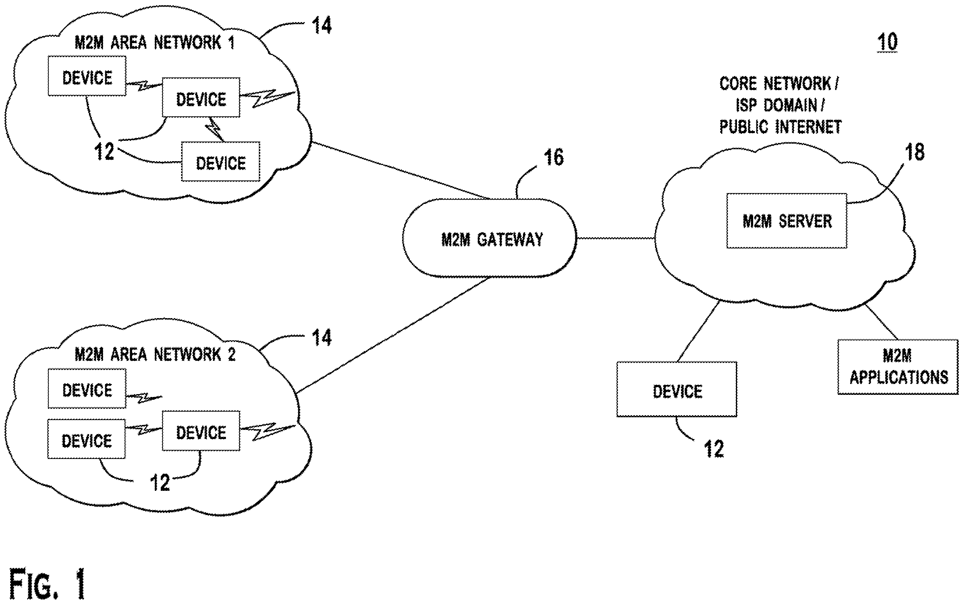

FIG. 1 shows an example system architecture of a machine-to- machine (M2M) network. The M2M system 10 includes a plurality of M2M devices 12, an M2M area network(s) 14, an M2M gateway(s) 16, and an M2M server(s) 18. The M2M area network 14 provides connectivity between M2M devices 12 and M2M gateways 16. Examples of M2M area networks 14 include, but are not limited to, personal area network such as IEEE 802.15, ZigBee, Bluetooth, or local networks such as Wireless M-BUS, etc. An M2M device 12 runs application(s) using M2M capabilities and network domain functions. An M2M device 12 may be connected straightly to the M2M server 18 or interfaced to the M2M gateway 16 via the M2M area network 14.

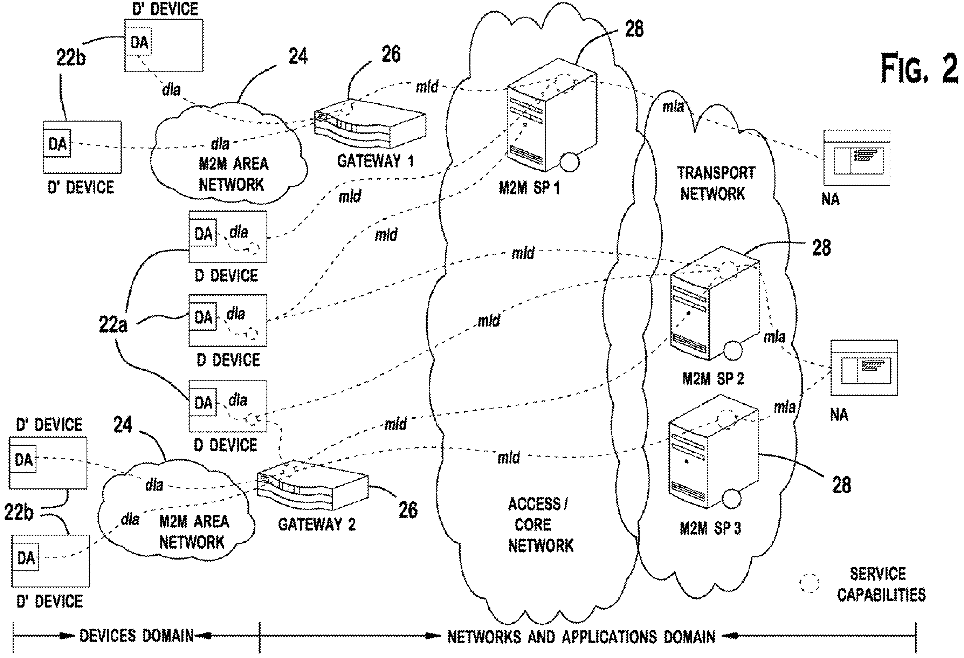

FIG. 2 shows the ETSI M2M architecture. In the ETSI M2M architecture, a D' device 22a is an M2M device that is interfaced via the M2M gateway 26 to connect to the M2M server 28, while a D device 22b is an M2M device that is directly connected to the M2M server 28. The M2M gateway 26 serves as a proxy for the M2M area network 24 to have a connection to the M2M server 28 and external networks.

A device application (DA) may reside in an M2M device 22a/22b that may or may not implement M2M service capabilities. An mla reference point allows an application to access the M2M service capabilities in the networks and applications domain. A dla reference point allows an application residing in an M2M device 22a/22b, (e.g., DA), to access different M2M service capabilities in the same M2M device 22a/22b or in an M2M gateway 26, and allows an application residing in an M2M gateway 26, (e.g., gateway application (GA)), to access different M2M service capabilities in the same M2M gateway 26. An mId reference point allows M2M service capabilities residing in an M2M device 22a/22b or M2M gateway 26 to communicate with the M2M service capabilities in the network and applications domain. The mId reference point uses core network connectivity functions as an underlying layer.

WO 2011/112683 A1 discloses a machine-to-machine entity, comprising an application layer, a service capability layer, wherein the service capability layer is configured to cache and manage resource in the service capability layer.

### SUMMARY

The invention is defined by claims 1 and 8.

A method and apparatus for supporting machine-to-machine (M2M) caching at a service capability layer are disclosed. A service capability layer of an M2M entity provides functions that are shared by the M2M applications and expose functionalities to the M2M applications through a set of open interfaces. The service capability layer may be configured to cache resources in a resource structure of the service capability layer. The service capability layer caching can provide complete cached resource discovery, and provide more intelligent and robust security mechanism to authenticate the clients. It also provides flexibility through subscription to the cached resource. M2M service may be virtualized in a cloud. An M2M cache manager may maintain a record of resources cached in a plurality of M2M servers and coordinate the M2M servers in caching the resources. The M2M cache manager may provide mapping between a virtualized cached resource and a real cached resource.

### BRIEF DESCRIPTION OF THE DRAWINGS

A more detailed understanding may be had from the following description, given by way of example in conjunction with the accompanying drawings wherein:
FIG. 1 shows an example system architecture of a machine-to-machine (M2M) network;
FIG. 2 shows the ETSI M2M architecture;
FIG. 3A is a system diagram of an example communications system in which one or more disclosed embodiments may be implemented;
FIG. 3B is a system diagram of an example wireless transmit/receive unit (WTRU) that may be used within the communications system illustrated in FIG. 3A;
FIG. 3C is a system diagram of an example radio access network and an example core network that may be used within the communications system illustrated in FIG. 3A;
FIG. 4 shows an example protocol structure of an M2M entity supporting service capability layer caching;
FIG. 5 shows an example ETSI M2M resource tree structure of an M2M gateway and an M2M server;
FIG. 6 shows an example case where a D' device registers a device application (DA) named *daapp* to the M2M gateway, and the M2M gateway is registered with the M2M server;
FIG. 7 shows an example resource structure created on the M2M gateway by a DA of the D' device;
FIG. 8 shows an example resource structure of the M2M server;
FIG. 9 shows a new structure of <containerAnnc> in accordance with one embodiment;
FIG. 10 shows an example <cachedContent> structure for the cached resource in accordance with one embodiment;
FIGS. 11A-11C are a flow diagram of an example process for resource discovery and resource retrieval for network applications;
FIG. 12 is a signaling flow for resource update notification without service capability layer (SCL) caching;
FIG. 13 is a signaling flow for resource update notification with SCL caching;
FIG. 14 shows an example accessRight resource structure;
FIG. 15 is a signaling diagram of an example process that the cached resource inherits the same *accessRightID* attribute from the original resource;
FIG. 16 shows ZigBee Smart Energy 2.0 resource structure;
FIG. 17 shows three cases that the legacy d device interfaces with the device SCL (DSCL), the gateway SCL (GSCL), and the network SCL (NSCL) through device inter-working proxy (DIP), gateway inter-working proxy (GIP), network inter-working proxy (NIP), respectively;
FIGS. 18A and 18B show the mapping of an M2M area network to the ETSI M2M resource architecture;
FIG. 19 shows the resource structure for cached resources originated from the non-ETSI M2M devices;
FIG. 20 shows application point of contact (aPoC) referencing the top-most resource in application resource structure of the ZigBee Smart Energy 2.0 resource structure;
FIG. 21 shows the case where aPoC references the top-most resource in application resource structure;
FIG. 22 shows an example cached resource structure for unannounced resources;
FIG. 23 shows an example resource structure including *caches* resource under <*sclBase*>;
FIG. 24 shows an example resource structure including *caches* resource under <*sclBase*>/*scls*/<*scl*>;
FIG. 25 shows an example *caches* resource structure;
FIGS. 26 and 27 show <cache> and <cachedContent> resources, respectively;
FIG. 28 shows an example M2M architecture with M2M servers residing or virtualized in the cloud;
FIG. 29 shows the virtualized resource structure;
FIG. 30 is a signaling diagram of an example process for separate subscription and separate notification; and
FIG. 31 is a signaling diagram of an example process for delegate and virtual subscription.

### DETAILED DESCRIPTION

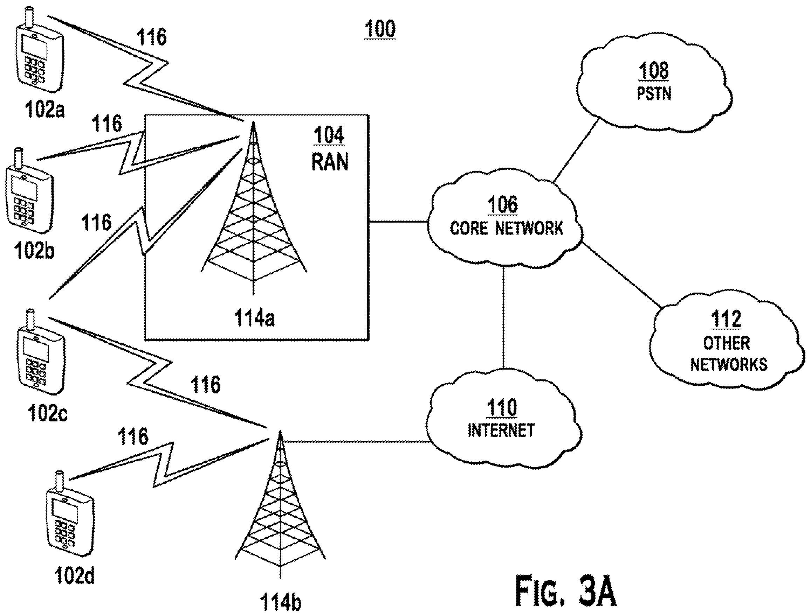

FIG. 3A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 3A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 3A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 3A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 3A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 3A may be configured to communicate with the base station 114a, which may employ a cellular-based radio technology, and with the base station 114b, which may employ an IEEE 802 radio technology.

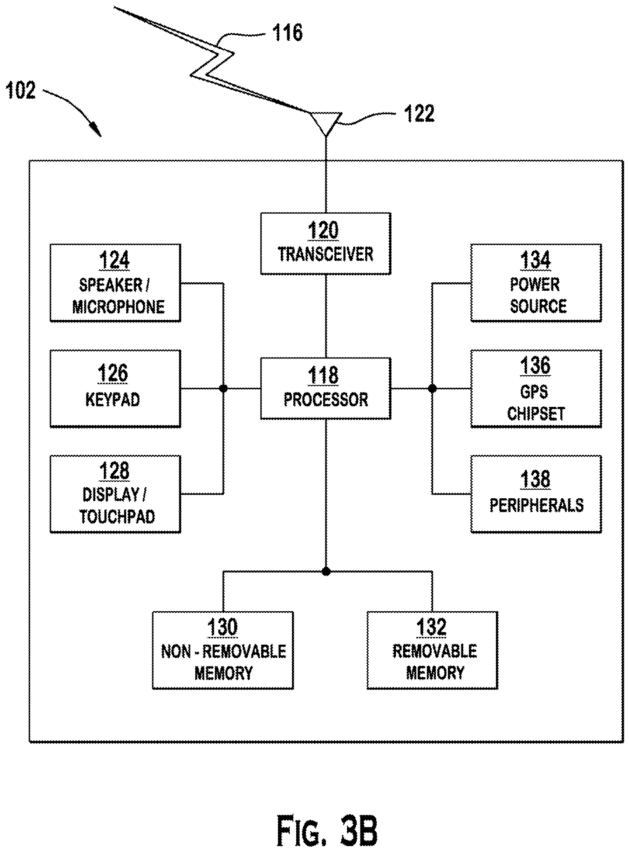

FIG. 3B is a system diagram of an example WTRU 102. As shown in FIG. 3B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 3B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 3B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

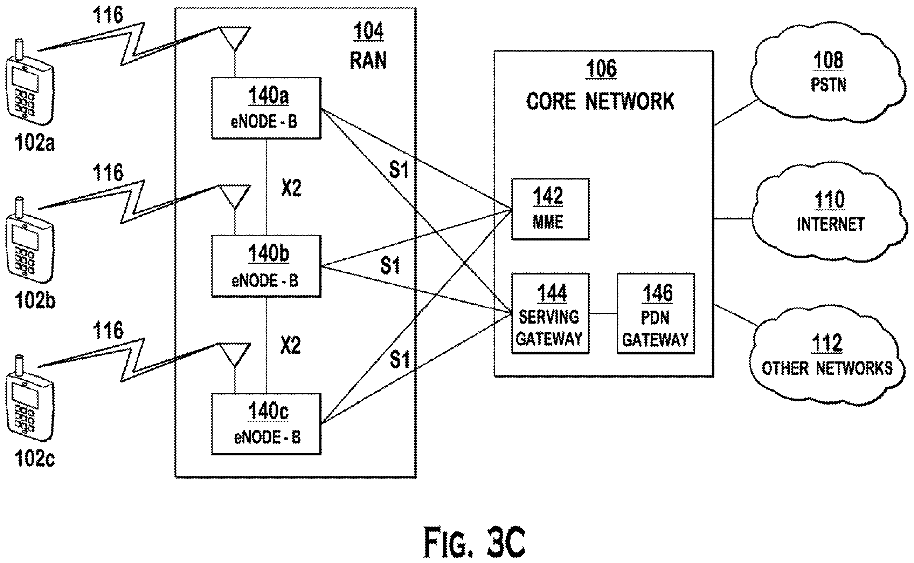

FIG. 3C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 3C, the eNode-Bs 140a, 140b, 140c may communicate with one another over an X2 interface.

The core network 106 shown in FIG. 3C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 140a, 140b, 140c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Caching is an important part of computing and networking systems, including the M2M system. A good caching strategy can decrease latency by huge percentages, and improves throughput by taking load off expensive back-end servers and databases.

Caching has been applied to the Internet system. Two main mechanisms are web caching and content delivery networks. A web cache temporarily stores or caches web documents passing through it, such as Hyper Text Markup Language (HTML) pages and images, to reduce bandwidth usage, server load, etc. Subsequent requests may be satisfied from the cache if certain conditions are met. Content delivery networks (CDNs) intend to increase Internet capacity by replicating content files to caches (i.e., surrogate servers) close to end users. The surrogate servers cache a set of content files and deliver them on behalf of the origins to decrease the traffic going through the origin servers as well as to decrease the overall network traffic. Typically, the surrogate servers are located at the edge of the network close to the end users. A content provider may sign up with a CDN provider, and nearby end users may then retrieve the content files from the surrogate server in a transparent fashion.

In the M2M system, caching may be supported at the application protocol layer. Hyper Text Transfer Protocol (HTTP) and Constrained Application Protocol (CoAP) may be used in the M2M system.

HTTP supports caching so that content may be stored by the browser locally or a proxy which sits somewhere between the client and the origin server, and reused when required. Some types of data such as stock prices and weather forecasts are frequently changed and it is important that the browser does not display stale versions of these resources. By carefully controlling caching, static content can be reused and the storage of dynamic data can be prevented.

HTTP defines three basic mechanisms for controlling caches: freshness, validation, and invalidation. Freshness allows a response to be used without re-checking it with the origin server. HTTP provides two ways for servers to specify the freshness lifetime of a response: the *Expires* header and the *max-age* cache control directive. The *Expires* header's value is the date and time when a response becomes stale. The *max-age* cache control directive specifies the number of seconds that the response should be considered fresh.

Validation can be used to check whether a cached response is still good after it becomes stale. A cache can make a conditional request using the *If-Modified-Since* header to see if it has changed. Another validator provided by HTTP/1.1 is known as an entity tag (ETag). An ETag is an opaque string used to identify a specific instance of an object. A cache uses an ETag to validate its object with the *If-None-Match* request header.

Invalidation is usually a side effect of another request that passes through the cache. If a URL associated with a cached response later gets a POST, PUT or DELETE request, the cached response will be invalidated.

CoAP supports the caching of responses in order to efficiently fulfill requests. Simple caching is enabled using freshness and validity information carried with CoAP responses. A cache may be located in an end-point or an intermediary. CoAP defines a more simplified freshness model, validation model and invalidation model than HTTP. For freshness, the *Max-Age* option indicates that the response is to be considered not fresh after its age is greater than the specified number of seconds. For validation, an end-point may use the *ETag* option in the GET request to give the origin server an opportunity to both select a stored response to be used, and to update its freshness. For invalidation, a cache should mark any stored response for a created, deleted and changed resource as not fresh.

It should be noted that embodiments disclosed herein are applicable to ETSI M2M architecture or non-ETSI M2M architecture that is currently available or that may be developed in the future.

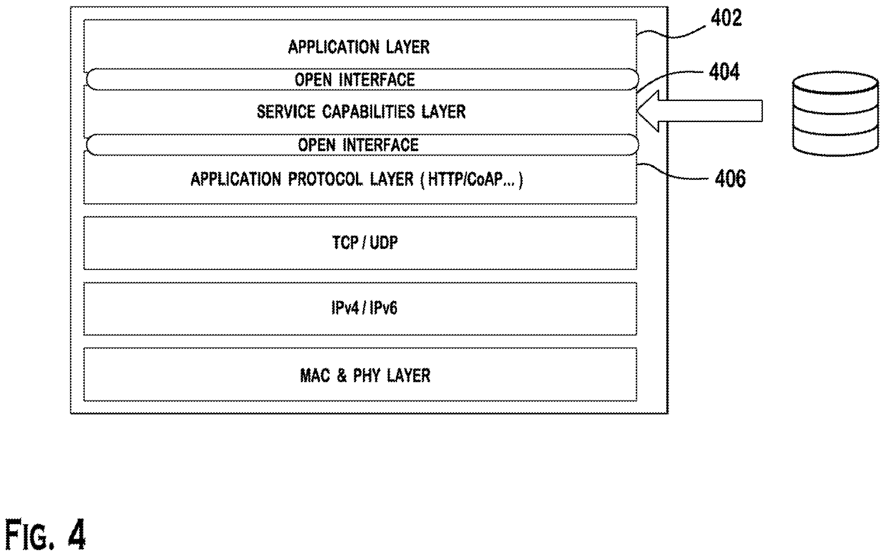

In one embodiment, caching may be supported at the SCL 404. FIG. 4 shows an example protocol structure of an M2M entity (e.g., an M2M device, an M2M gateway, and an M2M server) supporting service capability layer caching. The M2M device (D device), the M2M gateway and the M2M server share the similar architecture. The application layer 402 provides different kinds of M2M applications such as emission control, toll payment, production chain monitoring and automation, freight supply and distribution monitoring, etc. The SCL 404 provides functions that are shared by different applications. The SCL 404 exposes functionalities through a set of open interfaces. The SCL 404 may use core network functionalities, and simplify and optimize applications development and deployment while hiding network specificities to applications. The SCL 404 may interface with one or several core networks. The application protocol layer 406 supports protocols such as Hyper Text Transfer Protocol (HTTP) and Constrained Application Protocol (CoAP). The M2M devices which are interfaced to the M2M gateway to have a connection to the M2M server and external network may not have the SCL 404. The SCL 404 may be in charge of managing all the cached resources in the caches.

The SCL caching may provide complete cached resource discovery because the cached resources belong to the resource structure on the SCL 404. The cached resources may be assigned with new uniform resource identifiers (URIs) based on the caching locations. In this case, a resource may not only have the original URI, but also new URIs of the cached copies on other locations. The requester may choose one of the copies by using the corresponding URI. On the other hand, if the cached resource follows the same URI and the original URI is stored as an attribute or a sub-resource of the cached resource, the requester may choose where to retrieve the resource. The resource may not be returned from some web proxy automatically when there is a hit. Consequently, there may not be cache misses or resource misses, thus no extra proxy processing delay.

With the SCL caching, subscription to the cached resource becomes feasible and flexible. With subscription, the subscribers will be notified with the updated resource from a cached location, instead of from a remote original server. The service layer cache may also subscribe to the original resource for auto update of the cached copy. Therefore, the subscribers may be able to receive the auto-update of the refreshed resource, and may not have stale cached resources. The ETSI SCL may also support conditional subscription per a client's request, because the cached resources may be passed by the SCL layer to the application layer for interpretation or be handled directly by the ETSI SCL with the supported content aware service.

The benefit of caching of HTTP or CoAP is restricted by the session based transport layer security. The client and server on the two ends of a connection should agree on various parameters to establish the connection's security. As a result, if different clients do not share the same parameters, a proxy is not able to share a cached content retrieved by one client to a different client, because the new client fails the authentication. In an M2M system, an application needs to register with an M2M server or an M2M gateway to communicate with it. The same applies to server-to-server, gateway-to-server communications as well. This limits an M2M server or an M2M gateway to reuse the local copy of a resource to reply the requests from different applications, even they are asking for the same resource. On the contrary, the service capability layer caching may provide message level security. It supports more intelligent and robust security mechanisms to authenticate other clients. Each resource, whether originally created or cached, has a specific access right. It controls which clients are able to access the resource.

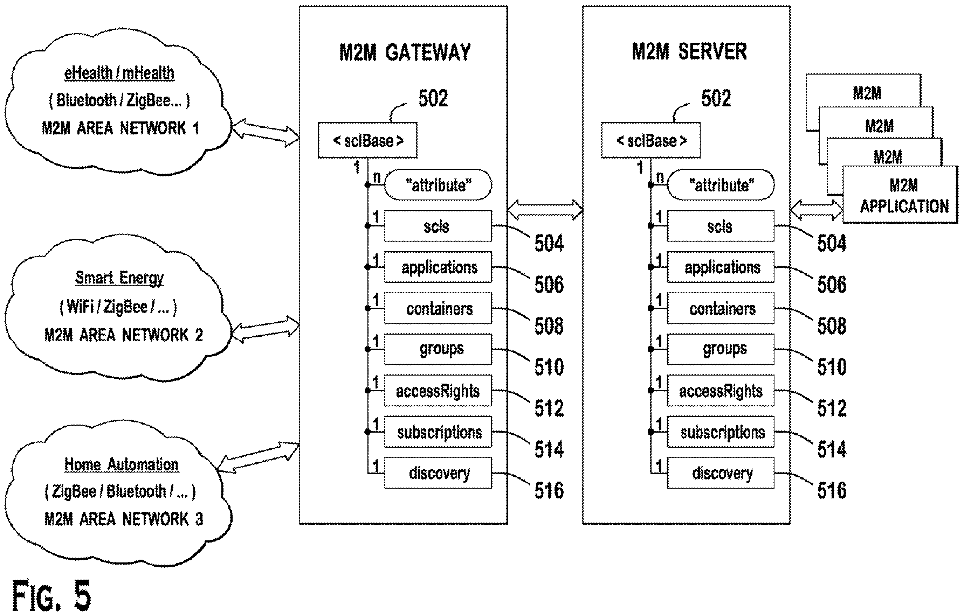

FIG. 5 shows an example ETSI M2M resource tree structure of an M2M gateway and an M2M server. The <*sclBase*> resource 502 contains all other sub-resources of the hosting M2M SCL. An <*sclBase*> resource 502 is the root of all other resources it contains. The <*sclBase*> resource 502 is represented by an absolute uniform resource identifier (URI). All other resources hosted in the SCL are identified by a URI that is hierarchically derived from the URI of the *<sclBase>. scls* resources 504 are resources that represent M2M SCLs managed on other entities than the hosting SCL (e.g., on other M2M devices, gateways, or servers) and which are authorized to interact with the local SCL. In order to be authorized to interact with the local SCL, the remote SCL may go through a M2M service registration procedure. An *<scl>* resource is created as a result of a successful registration of the SCL with the local SCL or vice-versa.

Applications resource 506 store information about the application. An <*application*> resource may be created as a result of successful registration of an application with the local SCL. Container resource 508 is a generic resource that may be used to exchange data between applications and/or SCLs by using the container as a mediator that takes care of buffering the data. Exchange of data between applications (e.g., on device and network side) is abstracted from the need to set up direct connections and allows for scenarios where both parties in the exchange are not online at the same time.

Group resource 510 may be used to define and access groups of other resources. AccessRight resource 512 may store a representation of permissions. An accessRight resource is associated with resources that may be accessible to entities external to the hosting SCL. Subscription resource 514 may be used to keep track of the status of active subscriptions to its parent resource. A subscription represents a request from the issuer to be notified about modifications on the parent resource. Discovery resource 516 may be used to perform a discovery on the sclBase.

To a device SCL (DSCL), a gateway SCL (GSCL), and a network SCL (NSCL), a resource may be regarded as announced or unannounced. An announced resource may be discovered and requested by applications from the local SCL. The announced resource may be originated from an ETSI M2M entity or from a non-ETSI M2M device, (e.g., a legacy ZigBee device). The non-ETSI M2M device may interface to the ETSI M2M SCLs through an M2M inter-working proxy or through an M2M application point of contact (aPoc) proxy.

In an ETSI M2M resource structure, an announced resource may point to the original resource hosted in another SCL. The purpose of the announced resource is to facilitate the discovery of the original resources when querying the announced-to SCL, so that the issuer of the discovery does not have to contact all SCLs in order to find the resources. For example, an announced resource may have the following combinations:
<*sclBase*>/*scls*/<*scl*>/*applications*/<*applicationAnnc*>;
<*sclBase*>/*scls*/<*scl*>/*containers*/<*containerAnnc*>;
<*sclBase*>/*scls*/*<scl>*/*containers*/<*locationContainerAnnc*>;
*<sclBase*>/*scls*/<*scl*>/*applications*/<*applicationAnnc*>/*containers*/<*conta inerAnnc*>;
<*sclBase>*/*scls*/*<scl>*/*applications*/*<applicationAnnc>*/*containers*/*<locati onContainerAnnc*>;
<*sclBase*>/*scls*/<*scl*>/*groups*/<*groupAnnc*>;
<*sclBase*>/*scls*/<*scl*>/*applications*/<*applicationAnnc*>/*groups*/<*groupAn nc>;*
<*sclBase*>/*scls*/*<scl>*/*accessRights*/<*accessRightAnnc*>; or
<*sclBase*>/*scls*/<*scl*>/*applications*/<*applicationAnnc*>/*accessRights*/<*acc essRightAnnc>.*

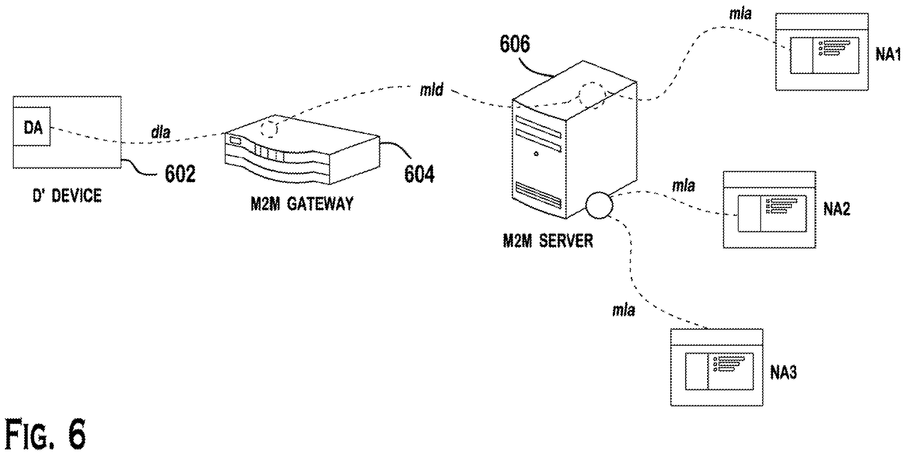

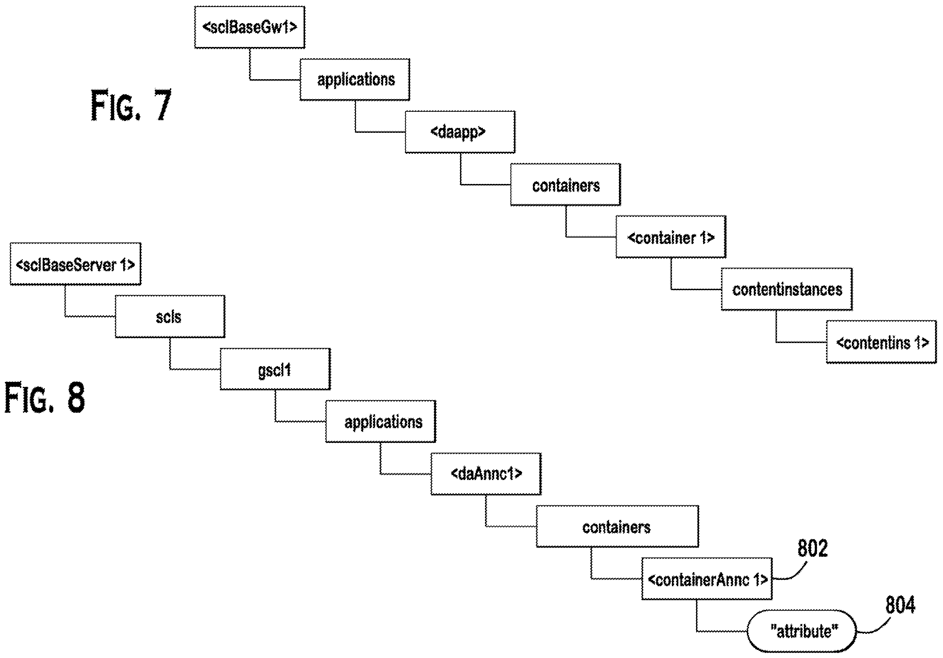

FIG. 6 shows an example case where a D' device 602 registers a DA named *daapp* to the M2M gateway 604, and the M2M gateway 604 is registered with the M2M server 606. *daapp* creates a container named *container1* and a content instance named *contentIns1* on the M2M gateway SCL <*sclBaseGw1*>. FIG. 7 shows an example resource structure created on the M2M gateway 604 by a DA of the D' device 602. For example, the URI of <*contentIns1*> may be <*sclBaseGw1*>/*applications*/<*daapp*>/*containers*/<*container1*>/*contentInstance s*/ <*contentIns1*>. The resource *<daapp>* and <*container1*> are announced to the M2M server 606, for example, from the setting when the resources are created. FIG. 8 shows an example resource structure of the M2M server 606 in this example. Under <*containerAnnc1*> 802, there is an *attributes* sub resource 804.

The network applications may discover the resource <*contentIns1*>. When NA1 requests the resource, the M2M server 606 acts as a proxy, and the resource representation is returned from the M2M gateway 604 through the M2M server 606. With SCL caching, the resource may be cached by the NSCL of the M2M server 606. If another network application NA2 requests the same resource later, it can be retrieved directly from the M2M server 606.

Embodiments for managing the caching of the resource (<*contentIns1*> in this example) will be explained with reference to the example of FIG. 6.

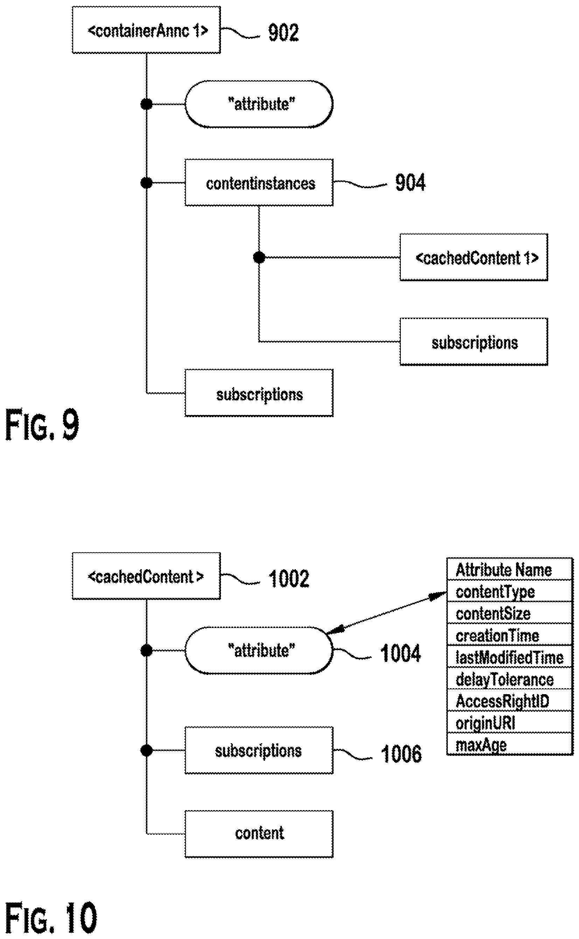

In one embodiment, more resources may be added under <*containerAnnc1*> 902 to cache <*contentIns1*> as shown FIG. 9. FIG. 9 shows a new structure of <containerAnnc> in accordance with one embodiment. <*contentIns1>* may be cached as one <*cachedContent*> under *contentInstances* 904 in <*containerAnnc1*> container 902. The *contentInstances* resource 904 represents the collection of content instances in a container. It may keep track of the latest (newest) and the oldest instance. These may reference the newest instance and the oldest instance in the collection, respectively. If there are no instances in the collection, the latest and oldest resources may not be present. The *contentInstances* resource 904 is special in that a retrieve on the *contentInstances* may give in the returned resource representation of the content of the <*contentInstance*> resources in the collection (subject to the filter criteria) and not just the references to these child resources.

With this structure, the *contentInstances* resource 904 may not need to have any updated attributes, but just replacing the sub-resource <*contentInstance*> with <cachedContent>, and no change may be needed to the resource *subscriptions.*

FIG. 10 shows an example <cachedContent> structure 1002 for the cached resource in accordance with one embodiment. <*cachedContent*> may have three more attributes and one more sub-resource compared to <*contentInstance*>, as shown in FIG. 10. The attribute 1004 may include *originURI, maxAge,* and *accessRightID.* The attribute *origin URI* keeps record of the original URI of the cached resource. The attribute *maxAge* indicates that a cached resource is to be considered not fresh after its age is greater than the specified number of seconds. The attribute *accessRightID* enables security down to the level of cached content instance. With the sub-resource *subscriptions,* clients may subscribe to each cached content instance.

As a virtual resource in the ETSI M2M resource structure, the discovery resource may be used to perform a discovery on the sclBase and provide a result back to the issuer. The request is addressed to <*sclBase*>/*discovery* of the hosting SCL.

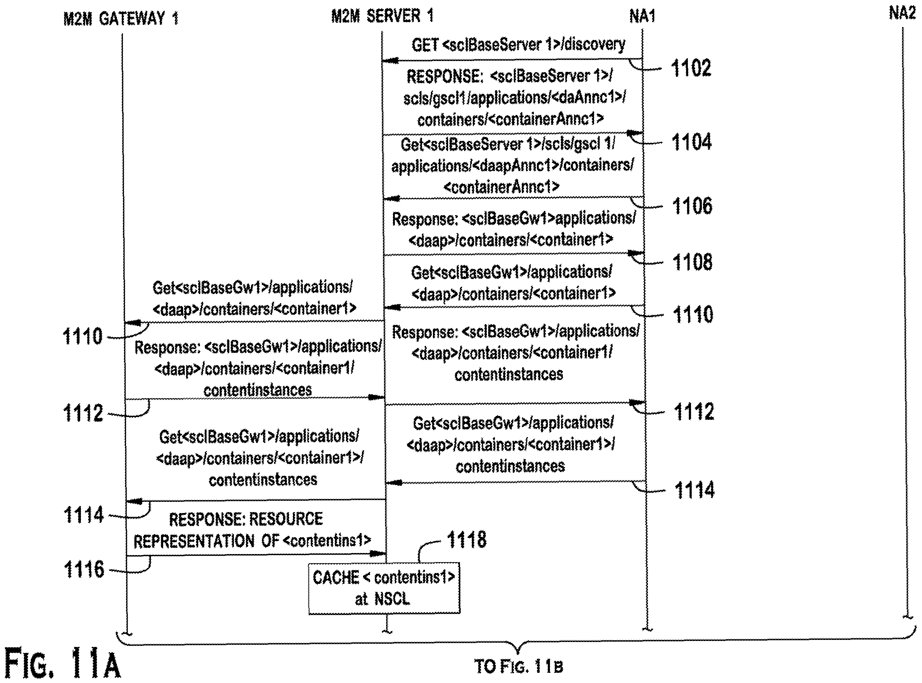

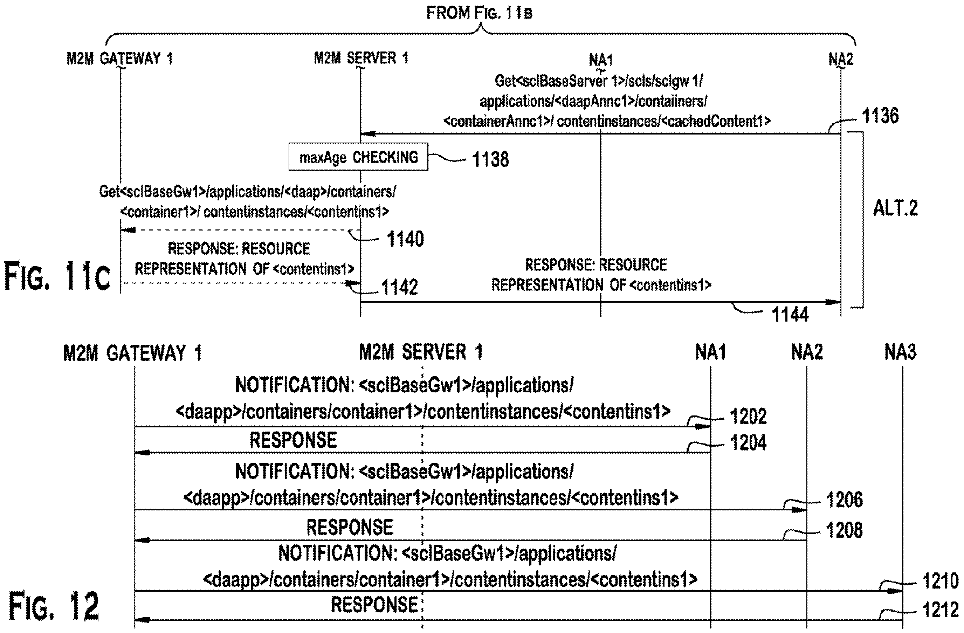

FIGS. 11A-11C are a flow diagram of an example process for resource discovery and resource retrieval for NA1 and NA2. NA1 issues a resource discovery request (e.g., GET *<sclBaseServer1*>/*discovery*) to M2M server1, (i.e., <*sclBaseServer1*>) (1102). Some filter criteria may be added to the GET request for NA1's interest. M2M server1 returns a success response with the URI of the resource matching the filter criteria, which is an announced container created by *daapp* on the GSCL on M2M gateway1 (1104). The announced container has the URI of <*sclBaseServer1*>/*scls*/*gscl1*/*applications*/<*daAnnc1*>/*containers*/<*containerAn nc1*>.

NA1 then issues a retrieve request to M2M server1 for <*containerAnnc1*> (1106). The announced resource is an actual resource which includes a limited set of attributes, which are the *searchStrings,* the *link* to the original resource, and the access right. As a result, NA1 receives the *Link* attribute of <*containerAnnc1*>, which contains the URI of the announced resource (1108).

NA1 issues a retrieve request to M2M gateway1 for <*container1*> via M2M server1 (1110). The <*container*> resource contains sub resources and attributes, among which is *contentInstancesReference.* It is the reference to the sub-resource *contentInstances* in <*container*>. NA1 receives the URI of the sub-resource of <*container1*> (1112). M2M server1 acts as a proxy for NA1 to request the resource.

NA1 issues a retrieve request to M2M gateway1 for *contentInstances* via M2M server1 (1114). The *contentInstances* resource represents the collection of content instances in a container. A retrieve on the *contentInstances* gives the resource representation of the content of the <*contentInstance*> resources in the collection (subject to the filter criteria) and not just the references to the child resources. Acting as a proxy for NA1, M2M server 1 receives the resource representation of <*contentIns1*> (1116) . With the SCL caching, the NSCL on M2M server1 caches the <*contentIns1*> with resource structure (1118). M2M server1 forwards the resource representation of <*contentIns1*> to NA1 (1120).

NA2 issues a resource discovery request (e.g., GET <*sclBaseServer1*>/*discovery*) to M2M server1, (i.e., <*sclBaseServer1*>) (1122). Since the NSCL of M2M server1 cached the resource representation of <*contentIns1*>, M2M server1 may send a response to NA2 (1124). M2M server1 may return NA2 with the original URI and the local URI of the discovered resource. Alternatively, M2M server1 may return NA2 with the original URI of the discovered resource. Alternatively, M2M server1 may return NA2 with the local URI of the discovered resource.

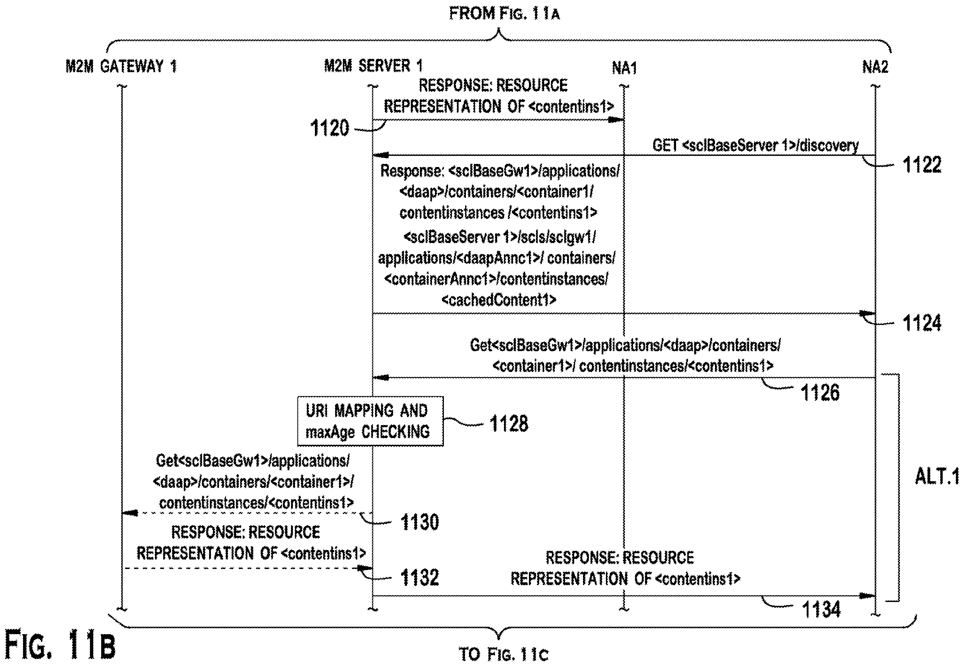

The original URI is stored in the *originURI* attribute of the cached copy. The local URI is generated following the SCL resource tree. When NA2 receives the response message, it gets to know that there is a cached copy of the desired resource from the response. FIG. 11B shows that M2M server1 returns both URIs to NA2.

NA2 has a flexibility to choose one of the URIs returned from M2M server1. NA2 may issue a retrieve request to M2M gateway1 using the original URI of the resource (1126).

When M2M server1 receives the request from NA2, M2M server1 may find a cached copy by mapping the original URI to the originURI attribute of all cached resources (1128). M2M server1 also checks the maxAge attribute of the cached resource (1128). M2M server1 may return the cached resource directly if its maxAge is still over 0. If the maxAge has expired, M2M server1 may issue an update request or forward NA2's request to the original resource on M2M gateway1 (1130). M2M server1 receives a response including resource representation of <*contentIns1*> from M2M gateway1 and forwards it to NA2 (1132, 1134). As a result, a fresh resource may be returned to NA2.

Alternatively, NA2 may issue a retrieve request to M2M gateway1 using the local URI of the cached resource (1136). M2M server1 checks the *maxAge* attribute of the cached resource (1138). M2M server1 may return the resource representation with the locally cached copy if its maxAge is still over 0. If the maxAge has expired, M2M server1 may issue an update request or forward NA2's request to the original resource on M2M gateway1 (1140). M2M server1 receives a response including resource representation of <*contentIns1*> from M2M gateway1 and forwards it to NA2 (1142, 1144). As a result, a fresh resource may be returned to NA2.

The SCL caching ensures the complete discovery and existence of the cached resources. There will be no cache miss or resource miss issue of the application protocol layer caching, thus no extra proxy process delay.

Referring to the example in FIG. 6, NA1, NA2, and NA3 are all interested in the resource on the GSCL of the M2M gateway1 and subscribe to the resource with URI of <*sclBaseGw1*>/*applications*/<*daapp*>/*containers*/<*container1*>/*contentInstance s*/*.* To subscribe to a resource, NA1, NA2, and NA3 may create a subscription resource in the corresponding *subscriptions* collection.

A notification procedure is used to notify the subscribers of a modification of a resource for which it has an active subscription. The subscription type may be asynchronous or long-polling. Asynchronous subscription will be explained hereafter for simplicity, but the embodiments are still applicable to the long-polling case. The *<subscription>* resource includes an attribute *contact.* The *contact* attribute is used to directly send the updated resource representation to the subscriber, which is the URI where the subscriber wants to receive its notifications. The subscriber receives the notification and sends a successful response back.

FIG. 12 is a signaling flow for resource update notification without SCL caching. Without SCL caching, the M2M gateway1 sends notifications to each of the subscribers (NA1, NA2, and NA3) (1202, 1206, 1210), and each of the subscribers sends a success response back to the M2M gateway1 (1204, 1208, 1212).

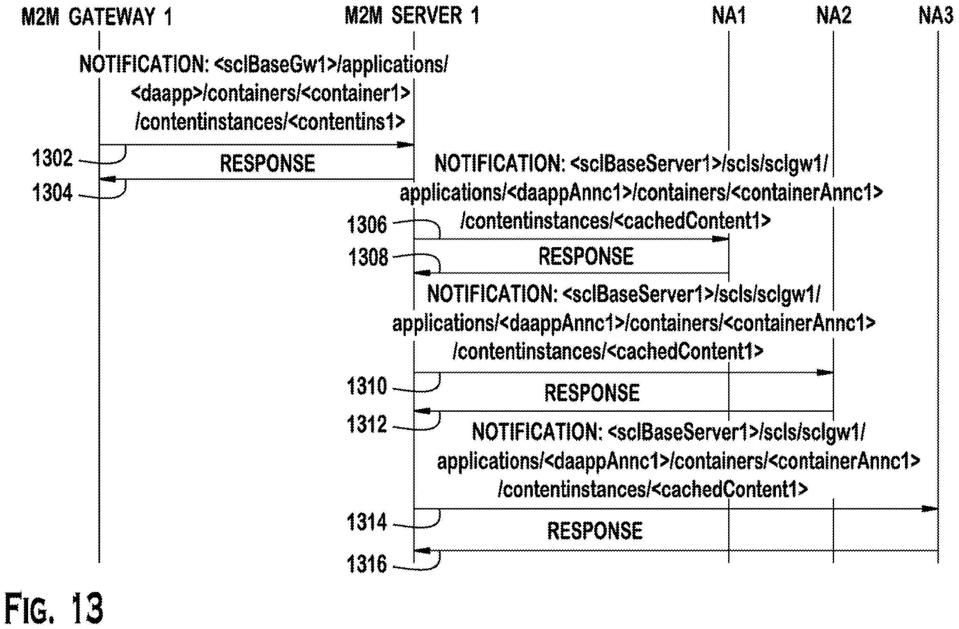

FIG. 13 is a signaling flow for resource update notification with SCL caching. With SCL caching, the NSCL of the M2M server1 caches one copy of the resource. Instead of subscribing to the original resource (M2M gateway1 in this example), NA1, NA2 and NA3 may choose to subscribe to the nearby copy of the resource at the M2M server1, which has a URI of <*sclBaseServer1*>/*scls*/*gsc1*/*applications*/<*daAnnc1*>/*containers*/<*containerAn nc1*>/*contentInstances*/<*cachedContent1*>. The NSCL of the M2M server1 may also subscribe to the resource on the original server with a URI of <*sclBaseGw1*>/*appₗications*/<*daapp*>/*containers*/<*container1*>/*contentInstance s*/<*contentIns1*>.

The GSCL of the M2M gateway1 sends the notification to the NSCL of the M2M server1 that there is a new version of the resource (1302). The NSCL of the M2M server1 receives the updated version and replaces the stale one in the cache, and sends a response to the GSCL of the M2M gateway (1304). Receipt of the notification at the M2M server1 triggers notifications to the subscribers as well. The NSCL of the M2M server1 forwards the notifications to NA1, NA2 and NA3, respectively (1306, 1310, 1314). NA1, NA2, and NA3 send a successful response back to the M2M server1, respectively (1308, 1312, 1316). Compared to the process without SCL caching shown FIG. 12, SCL caching reduces the transmission overhead between the M2M gateway1 and M2M server1. The updated resource may be retrieved once from the GSCL by the NSCL, and the other subscribers may get auto update of the nearby cached copy.

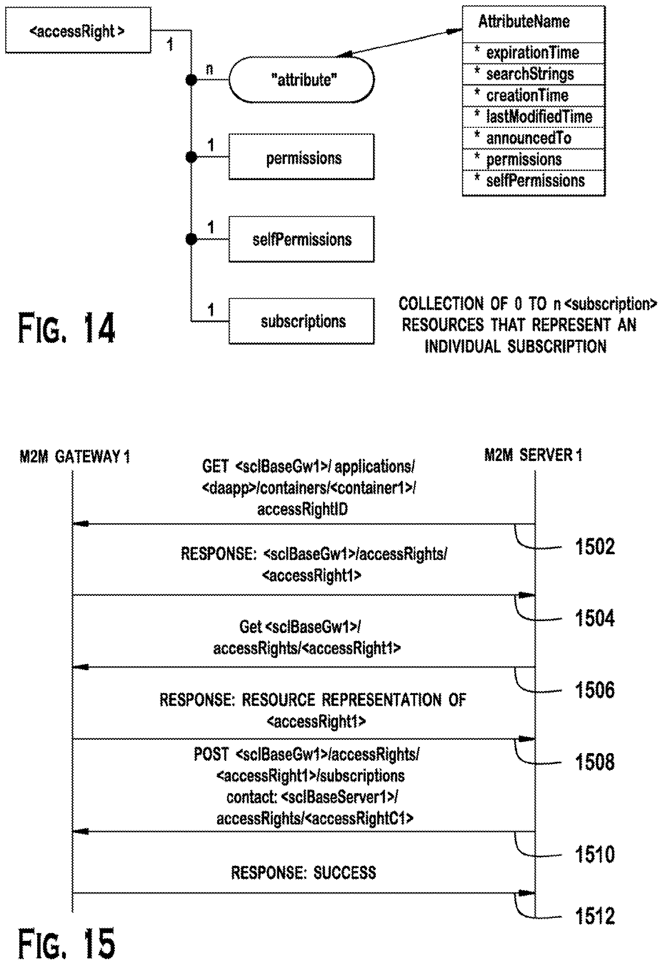

FIG. 14 shows an example accessRight resource structure. The cached resource may have an *accessRightID* attribute, which is the URI of an access right resource as shown in FIG. 14. The "permissions" defined in the <*accessRight*> resource that is referenced determine who is allowed to access the resource. The *accessRightID* attribute of the cached resource may be inherited from the original resource or reconfigured. If a resource type does not have an *accessRightID* attribute definition, the access rights for resources of that type may be governed in a different way. For example, the access right associated with the parent may apply to a child resource that does not have an *accessRightID* attribute definition, or the permissions for access may be fixed.

FIG. 15 is a signaling diagram of an example process that the cached resource inherits the same *accessRightID* attribute from the original resource. When the NSCL of the M2M server1 caches the resource <*contentIns1*>, it generates a GET request(s) to the original SCL to check the access right before allowing an application or another SCL to access the cached resource. Since in the current ETSI M2M architecture, the resource *contentInstances,* (i.e., *<contentInstance>*), do not have *accessRightID* attribute defined, the access right of their parent resource <*container*> may be applied to them. In order to get the *accessRightID* attribute resource, the M2M server1 may issue a GET request to the M2M gateway1, with the requesting URI set to be <*sclBaseGw1*>/*applications*/<*daapp*>/*containers*/<*container1*>/*accessRightID* (1502). The M2M gateway returns a response message with the URI of the corresponding access right resource (<*sclBaseGW1*>/*accessRights*/<*accesRight1*>) (1504).

The NSCL of the M2M server1 then retrieves the <accessRight> resource from the GSCL of the M2M gatway1 (1506, 1508). The NSCL of the M2M server1 assigns the values to the access right of the cached resource. It is assumed that the <*accessRightID*> attribute of the cached resource stores the URI of the corresponding <*accessRight*> as <*sclBaseServer1*>/*accessRights*/<*accesRightC1*>.

The NSCL of the M2M server1 may subscribe to <*accessRightC1*> resource by creating a *<subscription>* resource (1510, 1512). It may address the *subscriptions* collection resource with the URI of <*sclBaseGw1*>/*accessRights*/<*accessRight1*>/*subscriptions.* The *contact* attribute of the *<subscription>* resource may be set to <*sclBaseServer1*>/*accessRights*/<*accesRightC1*>. With this procedure, the cached resource may maintain the same access rights as the original resource.

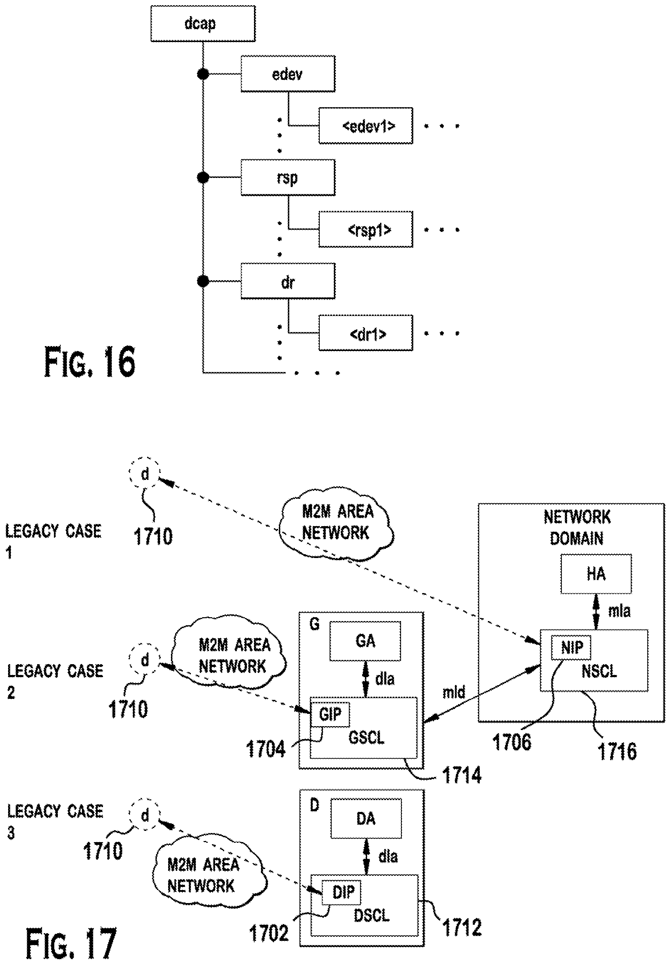

There are many other M2M area networks that do not adopt the same ETSI M2M defined SCL resource structure, such as Zigbee Smart Energy 2.0. FIG. 16 shows ZigBee Smart Energy 2.0 resource structure.

M2M legacy devices may interface with the M2M SCLs. One solution is by using M2M gateway inter-working proxy (GIP), M2M device inter-working proxy (DIP) and M2M network inter-working proxy (NIP) defined in the ETSI M2M architecture. Another solution is by using an M2M application point of contact (aPoc).

FIG. 17 shows three cases that the legacy d device 1710 interfaces with the DSCL 1712, the GSCL 1714, and the NSCL 1716 through DIP 1702, GIP 1704, NIP 1706, respectively. The interworking proxy unit (IPU), DIP 1702, GIP 1704 and NIP 1706, is responsible to discover the M2M area network structure, create an ETSI M2M resource structure representing the M2M area network structure in the ETSI M2M SCL, and manage the ETSI M2M resource structure in case the M2M area network structure changes.

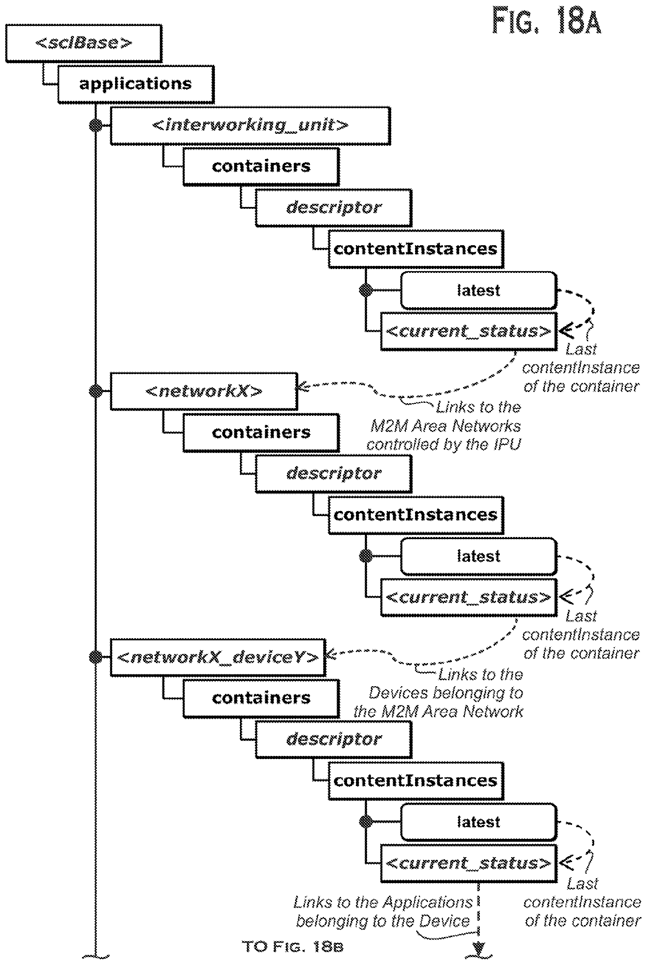

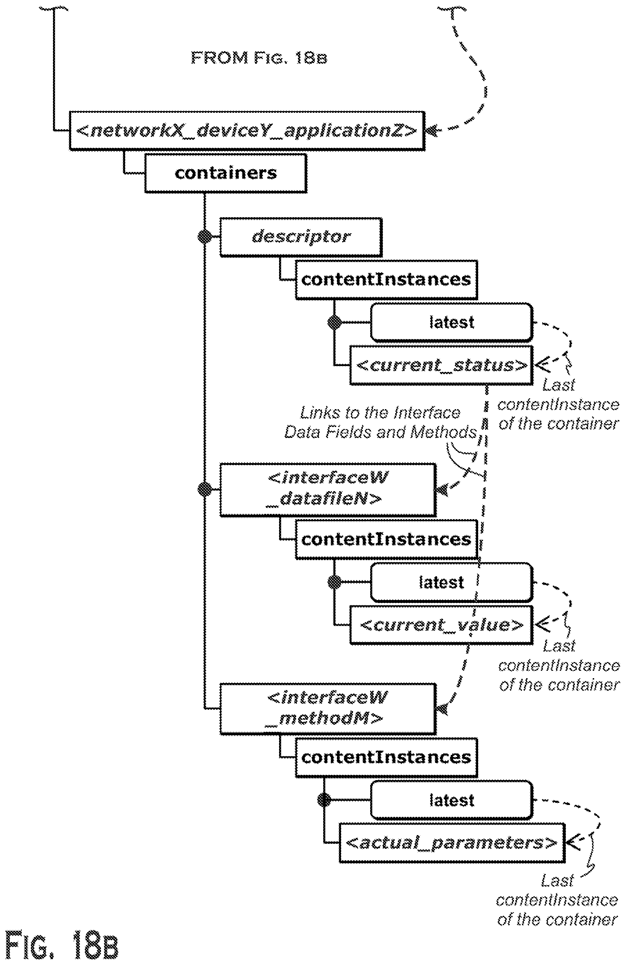

FIGS. 18A and 18 show the mapping of an M2M area network to the ETSI M2M resource architecture. The IPU is modeled with an ETSI M2M <*application*> resource. Each M2M area network controlled by an IPU is modeled with an ETSI M2M <*application*> resource. Each M2M legacy d device belonging to an M2M area network is modeled with an ETSI M2M <*application*> resource. Each application belonging to an M2M legacy d device (which are not ETSI M2M applications) is modeled with an ETSI M2M <*application*> resource.

Each data field and each method belonging to an interface implemented by an application may be mirrored or retargeted. Mirroring keeps a data field synchronized with its representation in the M2M resource structure. Retargeting is defined as the mechanism that allows fetching the data directly from the device, which is without storing the data in the M2M resource structure. With SCL caching, the retargeted resource data may be cached for later requests, without going to fetch it from the M2M legacy d device.

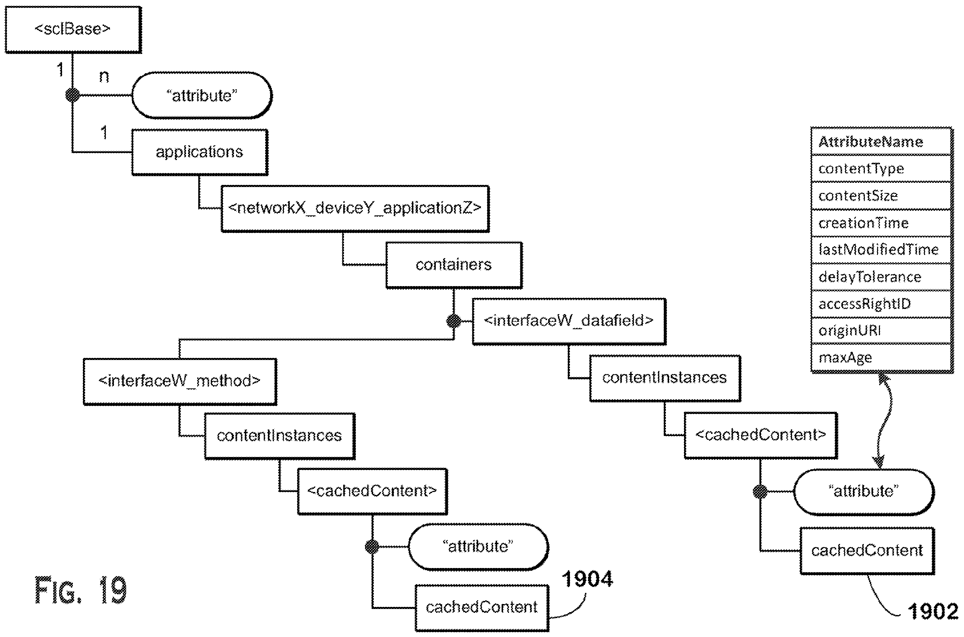

The ETSI M2M SCL acts as a proxy for the device application from the non-ETSI M2M device. When a request is received from a network application targeting the resource on the non-ETSI M2M device, the ETSI M2M SCL, to which the non-ETSI M2M device registers and interfaces, forwards the resource request to retarget the non-ETSI M2M device and the resource response to retarget the network application. This gives the ETSI M2M SCL an opportunity to cache the messages. FIG. 19 shows the resource structure for cached resources originated from the non-ETSI M2M devices. In one embodiment, a *cachedContent* resource 1902, 1904 may be used to store the value of the retargeted data as shown in FIG. 19.

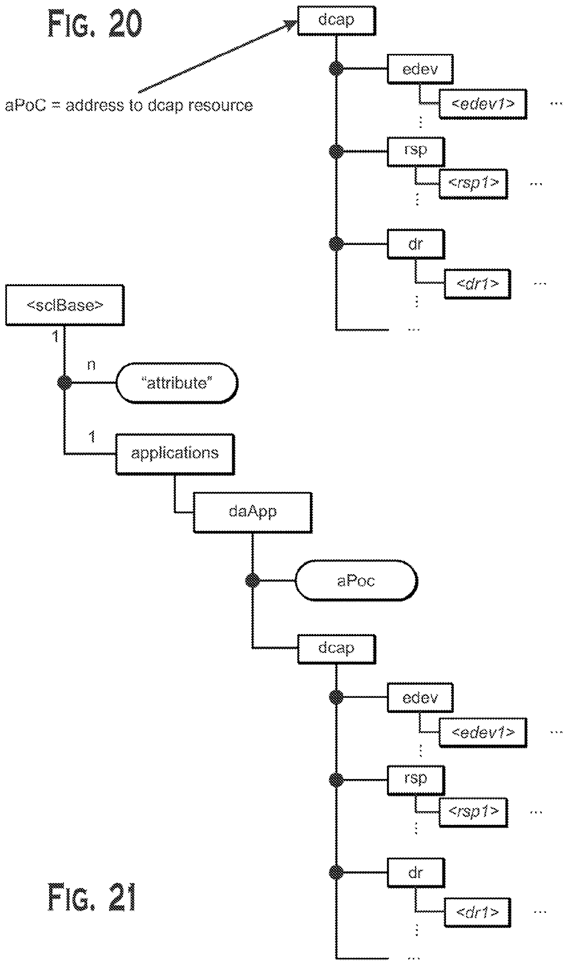

ETSI M2M currently supports a feature known as an aPoC which allows an application to register with an M2M SCL and provide the SCL with a forwarding address (i.e., point of contact) for the application. This address may be used by the M2M SCL to forward the request to the actual application to retrieve the hosted resources. For example, in case of the M2M area network with ZigBee Smart Energy 2.0 resource structure as shown in FIG. 20, aPoC references the top-most resource in application resource structure.

By using the M2M aPoc proxy, the resource structure on the ETSI M2M SCL may cache the original resource structure in the original M2M area network. With SCL caching, an ETSI M2M SCL may be able to cache the received resource data from the M2M legacy devices. FIG. 21 shows a resource structure for cached resources originated from non-ETSI M2M devices by an M2M aPoc proxy. Instead of just maintaining the contact address in the aPoC, the SCL may store the passing-by resources, still preserving the original resource structure as shown in FIG. 21.

An SCL may receive an unannounced resource from an ETSI M2M entity. It may happen if the resource URI is provisioned instead of announced, which means that the resource creator informs the potential requesters with the URIs of the resources. In the example of FIG. 6, the M2M gateway1 may inform its resources to the network applications (e.g., NA1, NA2, NA3). On the other hand, the network applications may issue a resource discovery on the remote SCL, which is the M2M gateway1 in FIG. 6. In these ways, the resources on the M2M gateway1 may be known to NAs, and to the NSCL of the M2M server1, those resources are unannounced.

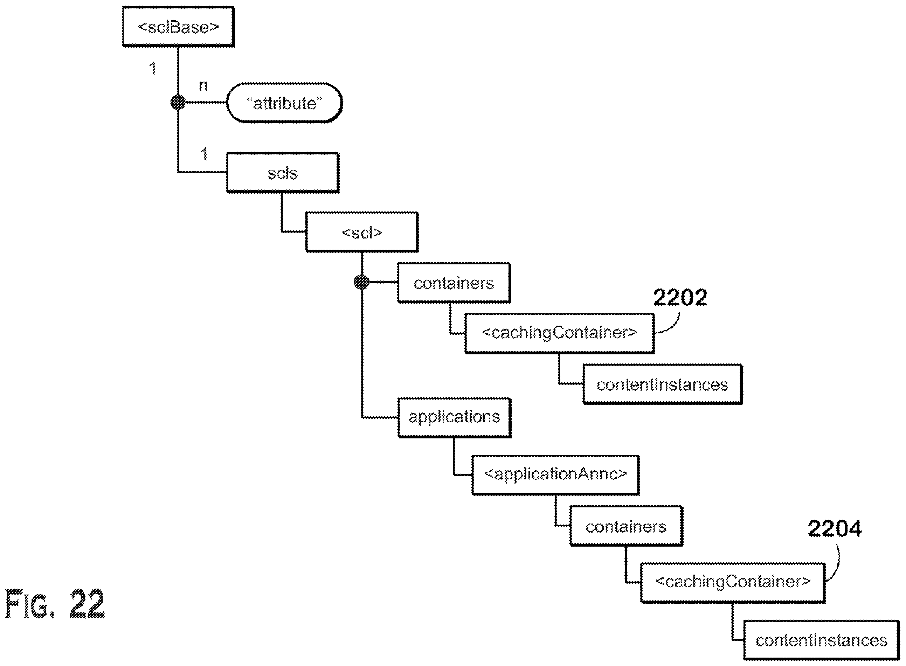

FIG. 22 shows an example cached resource structure for unannounced resources. In one embodiment, a cachingContainer resource 2202, 2204 may be created under containers, which is used to store the cached resources in contentInstances. The cached resource is originated from an SCL that should have been registered with the current SCL. The cached resource may be put under the <scl>. The <scl> is one SCL which has been registered with the current SCL.

This approach mixes the cached resource with locally created resources. It may cause complexities in managing those two kinds of resources. Current contentInstances collection resource keeps the latest and oldest resources, which may not be enough for cache management when the cache is full. Other statistics, such as the most popular, the least popular, self-developed and proprietary caching criteria may be needed for making good cache replacement decision. Under contentInstances collection resource, the current <contentInstance> resource contains the attributes and the content. In order to be able to map the content to the original URI, the original URI of the content may be added as one attribute in the attributes, or as one sub-resource under <*contentInstance*>.

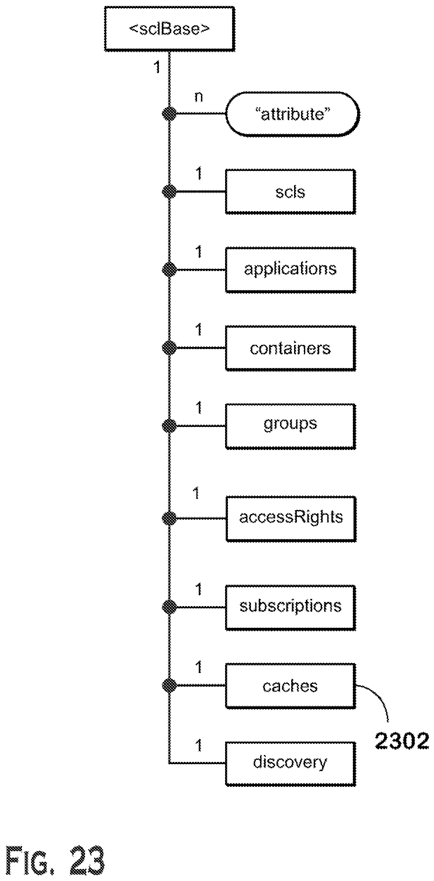

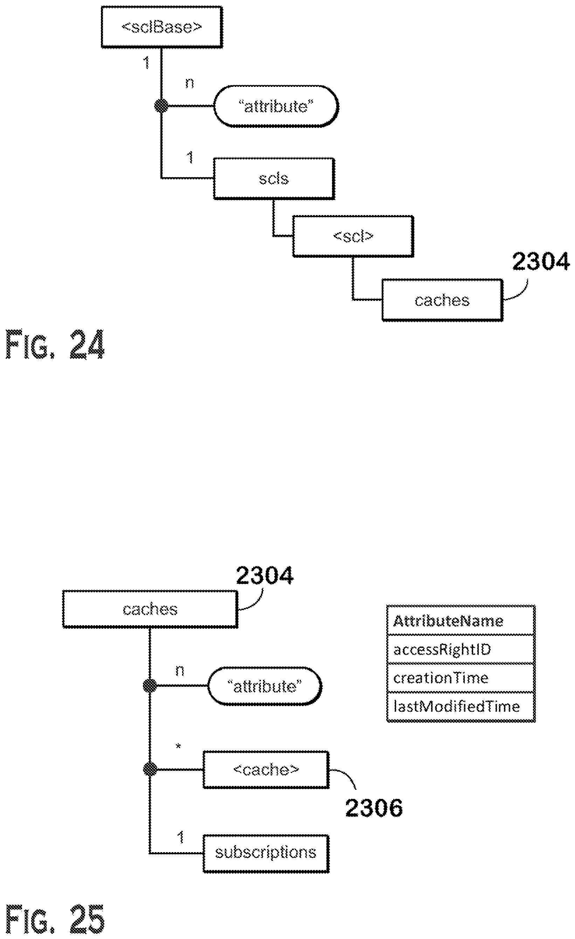

In another embodiment, a new *caches* collection resource may be created under <*sclBase*> and under <*sclBase*>/*scls*/<*scl*>. FIG. 23 shows an example resource structure including *caches* resource 2302 under *<sclBase>.* FIG. 24 shows an example resource structure including *caches* resource 2304 under <*sclBase*>/*scls*/<*scl*>. FIG. 25 shows an example *caches* resource structure. The *caches* resource 2302/2304 differentiates the cached resources from the locally originated resources. The *caches* resource 2302/2304 contains *attributes, <cache>* 2306, and *subscriptions.*

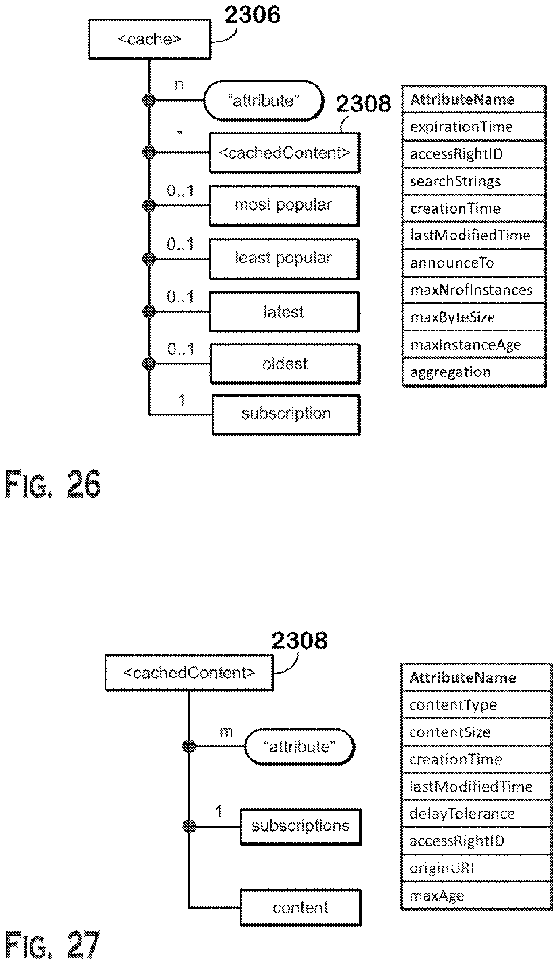

FIGS. 26 and 27 show <cache> and <cachedContent> resources, respectively. A *<cache>* resource 2306 may be used as an aggregation of the *<cachedContent>* resources 2308 under it. For example, the *<cache>* resource 2306 may contain the cached content from the same original server (e.g., <*sclBase*>/*scls*/<*gwscl*>/*caches*/<*cache*>). In another example, the *<cache>* resource 2306 may contain the cached content for temperature readings from different M2M devices (e.g., <*sclBase*>/*caches*/<*tempcache*>).

In order to show the property of the aggregation, one new attribute of <cache> may be added, named aggregation. The aggregation attribute may have the value such as the IP address or name of the original server from which the cached resources are generated, or the data type of the resources. Although the content of a resource is opaque to an SCL, the data type such as temperature reading or humidity reading may be inferred from the device's functionality.

As shown in FIG. 26, the <cache> resource 2306 may contain sub-resources of attributes, <*cachedContent*>, *most popular, least popular, latest, oldest* and *subscriptions.* The most popular, least popular, latest, oldest resources may be used as criteria for cache replacement. More criteria may be added under the <cache> resource 2306.

A <*cachedContent*> resource 2308 represents one cached resource and contains the corresponding content and *accessRightID, originURI* and *maxAge* attributes, as shown in FIG. 27.

It should be noted that the resource structures set forth in FIGS. 23-27 are generic, and these embodiments may be applied to the announced resources as well, (including announced resource from an ETSI M2M entity and from an M2M legacy device).

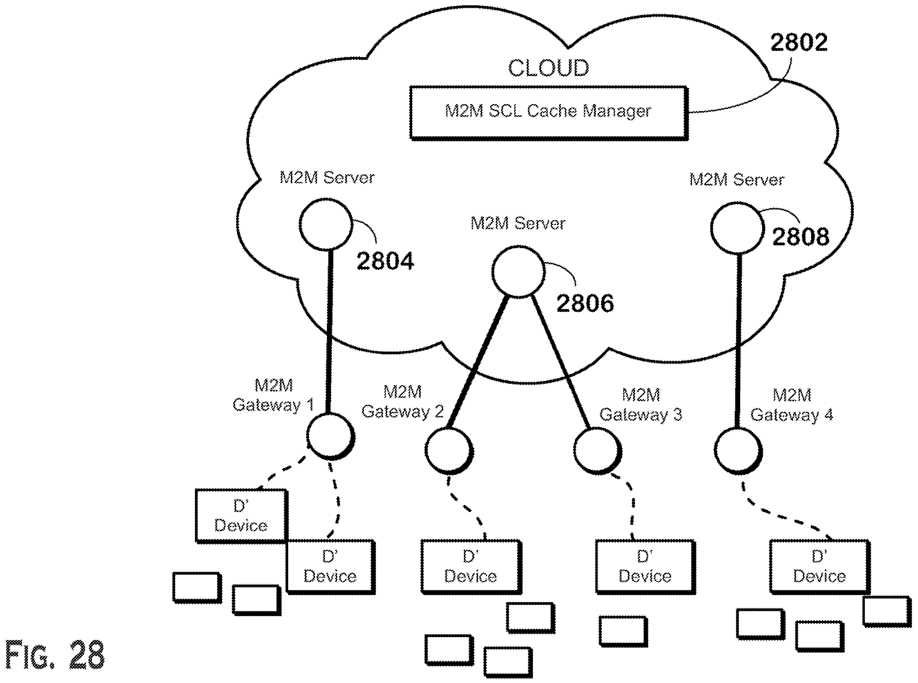

FIG. 28 shows an example M2M architecture with M2M servers 2804, 2806, 2808 residing or virtualized in the cloud. The cloud may be deployed with an M2M SCL cache manager 2802. The M2M SCL cache manager 2802 may maintain the record of what resources are cached in each of the M2M servers 2804, 2806, 2808. The cached resource record format maintained in the M2M SCL cache manager 2802 is shown in Table 1. All cached resources may be indexed by their original URI. The caching URI indicates the URI of the cached resources. The label indicates that whether the cached resource has a copy stored under the resource tree or it is virtualized (R means the real copy, V means the virtualized copy). The M2M servers 2804, 2806, 2808 may not cache the same resource in their local resource trees. Instead, there may be one copy of the cached resource located in the cloud. The M2M SCL cache manager 2802 keeps track of where it is physically stored and marks others as virtualized.

**Table 1**

| Original URI | Caching URI | Label |
|---|---|---|
| <sclBaseGw1>/applications/< daapp>/containers/<containe r1>/contentInstances/<conte ntIns1> | <sclBaseServer1>/scls/gscl1/applications/<da Annc1>/containers/<containerAnnc1>/conten tInstances/<cachedContent1> | R |
| | <sclBaseServer2>/caches/sclS1/<cachedCont ent1> | V |
| | <sclBaseServer3>/caches/sclS1/<cachedCont ent1> | V |

The M2M SCL cache manager 2802 may coordinate the M2M servers 2804, 2806, 2808 in caching the resources to avoid caching duplicate copies. The M2M SCL cache manager 2802 may maintain the freshness of the cached resources by subscribing to the original resource on behalf of the M2M servers 2804, 2806, 2808. The M2M SCL cache manager 2802 may provide the mapping between the virtualized cached resource to the location where it is cached. For example, if a cached resource is located in M2M server 2806, but also virtualized through the M2M SCL cache manager 2802 on M2M server 2808, when there is a request captured by M2M server 2808, the M2M SCL cache manager 2802 may map the virtualized resource to M2M server 2806, and fetch it for M2M server 2808. M2M server 2808 may then respond the request. Since M2M server 2806, M2M server 2808 and M2M SCL cache manager 2802 may be located in the same cloud.

Assume a resource (with the original URI of <sclBaseGw1>/applications/<daapp>/containers/<container1>/contentInstances/< contentIns1>) is new in the cloud, which means none of the M2M servers have a cached copy of the resource. When the resource is cached in an SCL of any M2M server (e.g., M2M server 2804) in the cloud, the M2M SCL cache manager 2802 may create a new record for the resource in the cached resource record table. The M2M SCL cache manager 2802 may request SCLs in other M2M servers (e.g., M2M servers 2806 and 2808) if they want to have a virtualized cached copy. The virtualized cached copy is defined as that the SCL creates it in the resource tree, but the resource itself is not stored locally in the SCL.

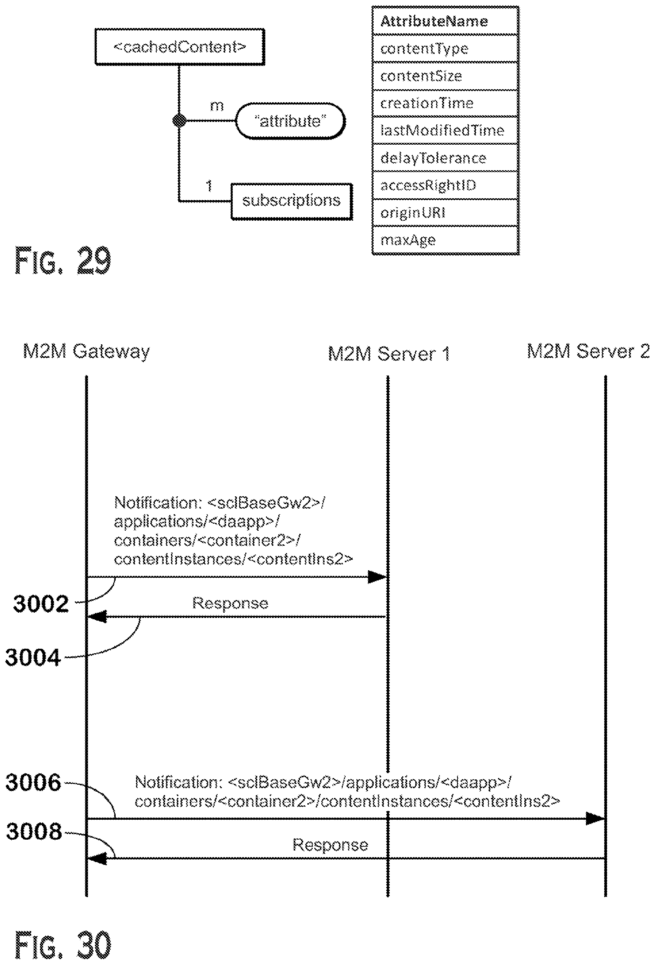

FIG. 29 shows the virtualized resource structure, which does not have a *content* sub-resource compared to FIG. 27. In this way, the cached resource may be discovered and requested by other network applications attached to the M2M servers 2806 and 2808 (e.g., NA2 running on M2M server 2806 or NA3 running on M2M server 2808), not only by an application running on M2M server 2804 (NA1). The M2M server 2806 or 2808 may accept the virtualization request, and generate a new URI for it. The resulting cached resource record table may be like Table 1.

If NA3 running on M2M server 2808 later wants to request the resource, it sends the request message to its attached M2M server 2808. The M2M server 2808 requests the M2M SCL cache manager 2802 to find the physical location of the resource. The M2M SCL cache manager 2802 checks the cached resource record table, and may fetch the content of the resource from the NSCL of the M2M server 2804.

The M2M SCL cache manager 2802 may coordinate the M2M servers in caching resources, for example, to avoid duplicate copies of the same resource in the cloud. For example, in case where M2M server 2806 and M2M server 2808 cached the same resource in their resource trees, the cached resource record table managed by the M2M SCL cache manager 2802 may be like Table 2. If the M2M SCL cache manager 2802 finds out that the resource is not popular among the network applications attached to M2M server 2808, it may decide to request M2M server 2808 to remove the copy of the resource from its resource tree (content of the resource) such that there is no duplicate of the resource in the cloud and the overall storage usage is more efficient. The M2M SCL cache manager 2802 then changes the label from R to V as shown in Table 3.

If the M2M SCL cache manager 2802 finds out that the resource is very popular among the network applications attached to M2M server 2804 (many requests from M2M server 2804 to the M2M SCL cache manager 2802 asking for the resource retrieval), the M2M SCL cache manager 2802 may request M2M server 2804 to cache the content of the resource to avoid the frequent requests. The resulting the cached resource record in the M2M SCL cache manager may be like Table 4.

**Table 2**

| Original URI | Caching URI | Label |
|---|---|---|
| <sclBaseGw2>/applications/< daapp>/containers/<containe r2>/contentInstances/<conten tIns2> | <sclBaseServer2>/scls/gscl2/applications/ <daAnnc1>/containers/<containerAnnc2> /contentInstances/<cachedContent2> | R |
| | <sclBaseServer3>/caches/gw2/<cachedCo ntent2> | R |
| | <sclBaseServer1>/caches/gw2/<cachedCo ntent2> | V |

**Table 3**

| Original URI | Caching URI | Label |
|---|---|---|
| <sclBaseGw2>/applications/< daapp>/containers/<containe r2>/contentInstances/<conten tlns2> | <sclBaseServer2>/scls/gscl2/applications/ <daAnnc1>/containers/<containerAnnc2> /contentInstances/<cachedContent2> | R |
| | <sclBaseServer3>/caches/gw2/<cachedCo ntent2> | V |
| | <sclBaseServer1>/caches/gw2/<cachedCo ntent2> | V |

**Table 4**

| Original URI | Caching URI | Label |
|---|---|---|
| <sclBaseGw2>/applications/< daapp>/containers/<containe r2>/contentInstances/<conten tlns2> | <sclBaseServer2>/scls/gscl2/applications/ <daAnnc1>/containers/<containerAnnc2> /contentInstances/<cachedContent2> | R |
| | <sclBaseServer3>/caches/gw2/<cachedCo ntent2> | V |
| | <sclBaseServer1>/caches/gw2/<cachedCo ntent2> | R |

The M2M SCL cache manager 2802 may coordinate the subscription to the original resources among the M2M servers. The M2M SCL cache manager 2802 may select one M2M server to subscribe the original resource on behalf of other M2M servers. Assume the cached resource record is shown as in Table 4, which indicates that the resource with the original URI of <*sclBaseGw2*>/*applications*/<*daapp*>/*containers*/<*container2*>/*contentInstance s*/<*contentIns2*> has two real copies cached by the SCLs of M2M server 2804 and M2M server 2806.

FIG. 30 is a signaling diagram of an example process for separate subscription and separate notification. M2M server 1 and M2M server 2 may subscribe the original resource separately. When the resource is updated, the notification is sent to M2M server 1 and M2M server 2 separately from M2M gateway (3002, 3006), and responses are sent separately from M2M server 1 and M2M server 2 to the M2M gateway (3004, 3008). This may cause the traffic between the M2M gateway and the cloud for duplicate messages.

The M2M SCL cache manager may coordinate the original resource subscription by adding one more column to the cached resource record table as shown in Table 5. In Table 5, "YD" denotes that the SCL of M2M server 2 subscribes to the original resource and is designated by the M2M SCL cache manager to do the subscription and receive notifications. "YV" denotes that the SCL of M2M server 1 also subscribes to the original resource in a virtual way, such that it does not receive notifications from the M2M gateway directly, but forwarded from M2M server 1 through the M2M SCL cache manager. "N" denotes that M2M server 3 does not subscribe to the original resource.

**Table 5**

| Original URI | Caching URI | Label | Subscription |
|---|---|---|---|
| <sclBaseGw2>/ap plications/<daapp >/containers/<con tainer2>/contentI nstances/<content Ins2> | <sclBaseServer2>/scls/gscl2/application s/<daAnnc1>/containers/<containerAnn c2>/contentInstances/<cachedContent2 > | R | YD |
| | <sclBaseServer3>/caches/gw2/<cachedC ontent2> | V | N |
| | <sclbaseServer1>/caches/gw2/<cachedC ontent2> | R | YV |

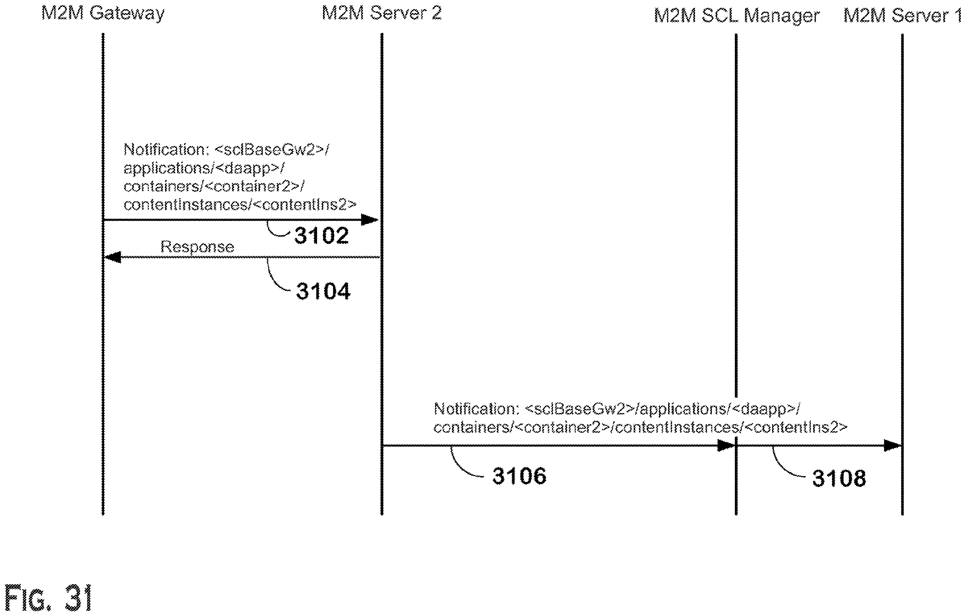

FIG. 31 is a signaling diagram of an example process for delegate and virtual subscription. When the resource is updated, the notification is sent to M2M server 2 from the M2M gateway (3102), and a response sent from M2M server 2 to the M2M gateway (3104). M2M server 2 forwards the notification to M2M serer 1 via the M2M SCL cache manager (3106, 3108).

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A machine-to-machine, M2M, device, comprising a processor configured to implement:
an application layer configured to provide M2M applications; and
a service capability layer configured to provide functions that are shared by the M2M applications and to expose functionalities to the M2M applications through a set of open interfaces, wherein the service capability layer is configured to cache resources in a resource structure of the service capability layer, wherein each resource cached in the resource structure has an original uniform resource identifier, URI, of the resource and a new URI of a copy of the resource on a location where the copy is cached, the service capability layer is configured to create a subscription resource in the resource structure in response to a subscription request from a subscriber to a cached resource at the M2M device, and to send a notification to the subscriber with an updated representation of the resource to notify the subscriber of a modification of the resource.

2. The M2M device of claim 1 wherein the cached resources are stored in an ETSI M2M resource structure.

3. The M2M device of claim 1 wherein the service capability layer is configured to receive a discovery request including filter criteria and return a response with a uniform resource identifier (URI) of a discovered resource that matches the filter criteria, wherein the service capability layer is configured to provide an original URI and/or a local URI of the discovered resource.

4. The M2M device of claim 1 wherein the cached resource inherits a same access right identification (ID) attribute from an original resource, or an access right of the cached resource is reconfigured.

5. The M2M device of claim 1 wherein the resource structure of the service capability layer includes a cached content resource for resources originated from a non-ETSI device or an ETSI device.

6. The M2M device of claim 1 wherein the cached resources are either announced resources or unannounced resources and the announced resources or the unannounced resources are stored under a containers resource.

7. The M2M device f claim 1 wherein the cached resources are stored in a cached resource under a service capability layer base resource.

8. A method implemented by a machine-to-machine, M2M, device, the method comprising:
providing M2M applications by an application layer of the M2M device;
providing functions, by a service capability layer of the M2M device, that are shared by the M2M applications;
the service capability layer exposing functionalities to the M2M applications through a set of open interfaces;
the service capability layer caching resources in a resource structure of the service capability layer, wherein each resource cached in the resource structure has an original uniform resource identifier, URI, of the resource and a new URI of a copy of the resource on a location where the copy is cached;
the service capability layer creating a subscription resource in the resource structure in response to a subscription request from a subscriber to a cached resource at the M2M device; and
sending a notification to the subscriber with an updated resource representation of the resource to notify the subscriber of a modification of the resource.

9. The method of claim 8 wherein the cached resources are stored in an ETSI M2M resource structure.

10. The method of claim 8, further comprising:
receiving a discovery request including filter criteria; and
sending a response with a uniform resource identifier (URI) of a discovered resource that matches the filter criteria, wherein the sending includes an original URI and/or a local URI of the discovered resource.

11. The method of claim 8 wherein the cached resource inherits a same access right identification (ID) attribute from an original resource, or an access right of the cached resource is reconfigured.

12. The method of claim 8 wherein the resource structure of the service capability layer includes a cached content resource for resources originated from a non-ETSI device or an ETSI device.

13. The method of claim 8 wherein the cached resources are announced resources or unannounced resources and the announced resources or the unannounced resources are stored under a containers resource.

14. The method of claim 8 wherein the cached resources are stored in a cached resource under a service capability layer base resource.

## Patentansprüche

1. Maschine-zu-Maschine-Vorrichtung (M2M-Vorrichtung), einen Prozessor umfassend, der dazu konfiguriert ist, Folgendes zu implementieren:
eine Anwendungsschicht, die dazu konfiguriert ist, M2M-Anwendungen bereitzustellen; und
eine Dienstfähigkeitsschicht, die dazu konfiguriert ist, Funktionen bereitzustellen, die durch die M2M-Anwendungen gemeinsam genutzt werden, und Funktionalitäten für die M2M-Anwendungen durch einen Satz offener Schnittstellen preiszugeben, wobei die Dienstfähigkeitsschicht dazu konfiguriert ist, Ressourcen in einer Ressourcenstruktur der Dienstfähigkeitsschicht zwischenzuspeichern, wobei jede in der Ressourcenstruktur zwischengespeicherte Ressource eine originale, gleichmäßige Ressourcenkennung (URI-Kennung) der Ressource und eine neue URI einer Kopie der Ressource an einer Stelle hat, wo die Kopie zwischengespeichert ist, die Dienstfähigkeitsschicht dazu konfiguriert ist, eine Teilnahmeressource in der Ressourcenstruktur im Ansprechen auf eine Teilnahmeanfrage von einem Teilnehmer an einer seitens der M2M-Vorrichtung zwischengespeicherten Ressource zu schaffen und eine Benachrichtigung an den Teilnehmer mit einer aktualisierten Darstellung der Ressource zu schicken, um den Teilnehmer über eine Modifikation der Ressource zu benachrichtigen.

2. M2M-Vorrichtung nach Anspruch 1, wobei die zwischengespeicherten Ressourcen in einer ETSI M2M-Ressourcenstruktur gespeichert sind.

3. M2M-Vorrichtung nach Anspruch 1, wobei die Dienstfähigkeitsschicht dazu konfiguriert ist, eine Feststellungsanfrage, die Filterkriterien enthält, zu empfangen und eine Antwort mit einer gleichmäßigen Ressourcenkennung (URI) einer festgestellten Ressource zurückzuschicken, die den Filterkriterien entspricht, wobei die Dienstfähigkeitsschicht dazu konfiguriert ist, eine originale URI und/oder eine lokale URI der festgestellten Ressource bereitzustellen.

4. M2M-Vorrichtung nach Anspruch 1, wobei die zwischengespeicherte Ressource ein und dasselbe Zugangsrechtidentifikationsattribut (ID-Attribut) von einer originalen Ressource erbt oder ein Zugangsrecht der zwischengespeicherten Ressource umkonfiguriert wird.

5. M2M-Vorrichtung nach Anspruch 1, wobei die Ressourcenstruktur der Dienstfähigkeitsschicht eine zwischengespeicherte Inhaltsressource für Ressourcen enthält, die von einer Nicht-ETSI-Vorrichtung oder einer ETSI-Vorrichtung stammt.

6. M2M-Vorrichtung nach Anspruch 1, wobei es sich bei den zwischengespeicherten Ressourcen entweder um angekündigte Ressourcen oder nichtangekündigte Ressourcen handelt, und die angekündigten Ressourcen oder die nichtangekündigten Ressourcen unter einer Containerressource gespeichert sind.

7. M2M-Vorrichtung nach Anspruch 1, wobei die zwischengespeicherten Ressourcen in einer zwischengespeicherten Ressource unter einer Dienstfähigkeitsschicht-Basisressource gespeichert sind.

8. Verfahren, das durch eine Maschine-zu-Maschine-Vorrichtung (M2M-Vorrichtung) implementiert wird, wobei das Verfahren umfasst:
Bereitstellen von M2M-Anwendungen durch eine Anwendungsschicht der M2M-Vorrichtung;
Bereitstellen von Funktionen durch eine Dienstfähigkeitsschicht der M2M-Vorrichtung, die gemeinsam durch die M2M-Anwendungen genutzt werden;
die Dienstfähigkeitsschicht Funktionalitäten für die M2M-Anwendungen durch einen Satz offener Schnittstellen preisgibt;
die Dienstfähigkeitsschicht Ressourcen in einer Ressourcenstruktur der Dienstfähigkeitsschicht zwischenspeichert, wobei jede in der Ressourcenstruktur zwischengespeicherte Ressource eine originale, gleichmäßige Ressourcenkennung (URI-Kennung) der Ressource und eine neue URI einer Kopie der Ressource an einer Stelle hat, wo die Kopie zwischengespeichert ist,
die Dienstfähigkeitsschicht eine Teilnahmeressource in der Ressourcenstruktur im Ansprechen auf eine Teilnahmeanfrage von einem Teilnehmer an einer in der M2M-Vorrichtung zwischengespeicherte Ressource schafft; und
eine Benachrichtigung an den Teilnehmer mit einer aktualisierten Ressourcendarstellung der Ressource schickt, um den Teilnehmer über eine Modifikation der Ressource zu benachrichtigen.

9. Verfahren nach Anspruch 8, wobei die zwischengespeicherten Ressourcen in einer ETSI M2M-Ressourcenstruktur gespeichert werden.

10. Verfahren nach Anspruch 8, darüber hinaus umfassend:
Empfangen einer Feststellungsanfrage, die Filterkriterien enthält; und
Schicken einer Antwort mit einer gleichmäßigen Ressourcenkennung (URI) einer festgestellten Ressource, die den Filterkriterien entspricht, wobei das Schicken eine originale URI und/oder eine lokale URI der festgestellten Ressource enthält.

11. Verfahren nach Anspruch 8, wobei die zwischengespeicherte Ressource ein und dasselbe Zugangsrechtidentifikationsattribut (ID-Attribut) von einer originalen Ressource erbt oder ein Zugangsrecht der zwischengespeicherten Ressource umkonfiguriert wird.

12. Verfahren nach Anspruch 8, wobei die Ressourcenstruktur der Dienstfähigkeitsschicht eine zwischengespeicherte Inhaltsressource für Ressourcen enthält, die von einer Nicht-ETSI-Vorrichtung oder einer ETSI-Vorrichtung stammt.

13. Verfahren nach Anspruch 8, wobei es sich bei den zwischengespeicherten Ressourcen entweder um angekündigte Ressourcen oder nichtangekündigte Ressourcen handelt, und die angekündigten Ressourcen oder die nichtangekündigten Ressourcen unter einer Containerressource gespeichert sind.

14. Verfahren nach Anspruch 8, wobei die zwischengespeicherten Ressourcen in einer zwischengespeicherten Ressource unter einer Dienstfähigkeitsschicht-Basisressource gespeichert sind.

## Revendications

1. Dispositif machine à machine (M2M) comprenant un processeur configuré pour implémenter :
une couche d'applications configurée pour fournir des applications M2M ; et
une couche de capacités de services configurée pour fournir des fonctions qui sont partagées par les applications M2M et pour présenter des fonctionnalités aux applications M2M via un ensemble d'interfaces ouvertes, sachant que la couche de capacités de services est configurée pour mettre en cache des ressources dans une structure de ressources de la couche de capacités de services, sachant que chaque ressource mise en cache dans la structure de ressources comporte un identifiant de ressource uniforme (URI) original de la ressource et un nouvel URI d'une copie de la ressource à un emplacement où la copie est mise en cache, la couche de capacités de services est configurée pour créer une ressource d'abonnement dans la structure de ressources en réponse à une demande d'abonnement d'un abonné à une ressource mise en cache au niveau du dispositif M2M, et pour envoyer une notification à l'abonné avec une représentation mise à jour de la ressource pour notifier à l'abonné une modification de la ressource.

2. Le dispositif M2M de la revendication 1, sachant que les ressources mises en cache sont stockées dans une structure de ressources M2M ETSI.

3. Le dispositif M2M de la revendication 1, sachant que la couche de capacités de services est configurée pour recevoir une demande de découverte incluant des critères de filtre et renvoie une réponse avec un identifiant de ressource uniforme (URI) d'une ressource découverte qui correspond aux critères de filtre, sachant que la couche de capacités de services est configurée pour fournir un URI original et/ou un URI local de la ressource découverte.

4. Le dispositif M2M de la revendication 1, sachant que la ressource mise en cache hérite d'un même attribut d'identification de droit d'accès (ID) depuis une ressource originale, ou un droit d'accès de la ressource mise en cache est reconfiguré.

5. Le dispositif M2M de la revendication 1, sachant que la structure de ressources de la couche de capacités de services inclut une ressource de contenu mise en cache pour des ressources provenant d'un dispositif non ETSI ou d'un dispositif ETSI.

6. Le dispositif M2M de la revendication 1, sachant que les ressources mises en cache sont soit des ressources annoncées soit des ressources non annoncées, et les ressources annoncées ou les ressources non annoncées sont stockées sous une ressource de contenants.

7. Le dispositif M2M de la revendication 1, sachant que les ressources mises en cache sont stockées dans une ressource mise en cache sous une ressource de base de couche de capacités de services.

8. Procédé implémenté par un dispositif machine à machine (M2M), le procédé comprenant :
la fourniture d'applications M2M par une couche d'application du dispositif M2M ;
la fourniture de fonctions, par une couche de capacités de services du dispositif M2M, qui sont partagées par les applications M2M ;
la couche de capacités de services présentant des fonctionnalités aux applications M2M via un ensemble d'interfaces ouvertes ;
la mise en cache, par la couche de capacités de services, de ressources dans une structure de ressources de la couche de capacités de services, sachant que chaque ressource mise en cache dans la structure de ressources comporte un identifiant de ressource uniforme (URI) original de la ressource et un nouvel URI d'une copie de la ressource à un emplacement où la copie est mise en cache ;
la création, par la couche de capacités de services, d'une ressource d'abonnement dans la structure de ressources en réponse à une demande d'abonnement d'un abonné à une ressource mise en cache au niveau du dispositif M2M ; et
l'envoi d'une notification à l'abonné avec une représentation de ressource mise à jour de la ressource pour notifier à l'abonné une modification de la ressource.

9. Le procédé de la revendication 8, sachant que les ressources mises en cache sont stockées dans une structure de ressources ETSI M2M.

10. Le procédé de la revendication 8, comprenant en outre :
la réception d'une demande de découverte incluant des critères de filtre ; et
l'envoi d'une réponse avec un identifiant de ressource uniforme (URI) d'une ressource découverte qui correspond aux critères de filtre, sachant que l'envoi inclut un URI original et/ou un URI local de la ressource découverte.

11. Le procédé de la revendication 8, sachant que la ressource mise en cache hérite d'un même attribut d'identification de droit d'accès (ID) depuis une ressource originale, ou un droit d'accès de la ressource mise en cache est reconfiguré.

12. Le procédé de la revendication 8, sachant que la structure de ressources de la couche de capacités de services inclut une ressource de contenu mise en cache pour des ressources provenant d'un dispositif non ETSI ou d'un dispositif ETSI.

13. Le procédé de la revendication 8, sachant que les ressources mises en cache sont des ressources annoncées ou des ressources non annoncées, et les ressources annoncées ou les ressources non annoncées sont stockées sous une ressource de contenants.

14. Le procédé de la revendication 8, sachant que les ressources mises en cache sont stockées dans une ressource mise en cache sous une ressource de base de couche de capacités de services.
